# EUROPEAN PATENT SPECIFICATION

(11) **EP 2 421 210 B1**
(45) Date of publication and mention of the grant of the patent: **16.10.2019**
(21) Application number: 11176524.4
(22) Date of filing: 04.08.2011
(51) Int. Cl.: H04L 12/58, H04N 1/00, H04N 1/32

(54) **Scan-to-mail apparatus, method and program product**
Informationsverarbeitungsvorrichtung, Verfahren zur Steuerung der Informationsverarbeitungsvorrichtung und Programm
Appareil de traitement d'informations, procédé de contrôle de l'appareil de traitement d'informations et programme

(30) Priority: 17.08.2010 JP 2010182468; 31.03.2011 JP 2011080043
(43) Date of publication of application: 22.02.2012
(73) Proprietor: Canon Kabushiki Kaisha, Tokyo 146-8501 (JP)
(72) Inventor: Hanada, Yoshinobu, Tokyo, Tokyo 146-8501 (JP)
(74) Representative: TBK

(56) References cited:
- EP-A1- 2 169 934
- WO-A1-2008/107299
- JP-A- 2008 252 437
- JP-A- 2009 049 722
- US-A1- 2005 231 757

## Description

### BACKGROUND OF THE INVENTION

### Field of the Invention

The present invention relates to an information processing apparatus which can transmit an electronic mail (also called a mail hereinafter).

### Description of the Related Art

In recent years, a paper original digitizing mechanism of scanning an original by a multifunction machine or the like, and transmitting image data of the scanned original from the multifunction machine or the like to a client terminal is used. When the image data is transmitted from the multifunction machine to the client terminal in this mechanism, an FTP (file transfer protocol) or an SMB (server message block) is used generally. Incidentally, when the FTP is used, it is necessary to set up an FTP server for each of the client terminals, thereby requiring great care. Further, when the SMB is used, it is necessary to form a shared folder for the respective terminals. Therefore, there is a case where the SMB cannot be used due to corporate security policy.

To solve such problems, there is a mechanism of transmitting image data by using a mail, as described in Japanese Patent Application Laid-Open No. 2005-210187. However, in the mechanism as described in Japanese Patent Application Laid-Open No. 2005-210187 for transmitting the image data by using the mail, it may put a lot of strain on a mail server.

Generally, the multifunction machine generally has a large-capacity storage. Consequently, instead of the mechanism of transmitting the mail with the image data attached, a mechanism of previously storing the scanned image data in the multifunction machine itself, and then transmitting the image data therefrom in response to user's access from the client terminal so as to enable a user at the client terminal to obtain the image data is desired.

In such a case, it is conceivable that a fact that the image data has been stored in the multifunction machine is first notified to the user by means of a mail. However, when the user who logged in to the multifunction machine and scanned the original is different from the user who intends to actually obtain the image data, there is a possibility that such a notification is transmitted by means of the mail to the user who cannot log in to the multifunction machine. Thus, for example, when the user who was notified by the mail intends to access from the client terminal to the notified multifunction machine to obtain the image data, there is a possibility that the relevant user cannot obtain the image data because he/she cannot log in to the multifunction machine.

This is because an authentication server controls the multifunction machines to which the user can log in so as to prevent that the user can randomly log in to various multifunction machines. In particular, since the plural multifunction machines are generally set up on each floor in a large company, for example, the multifunction machines to which the user can log in can be limited to those set up on, as a shared floor, the floor on which the relevant user works.
The JP 2009 049722 A discloses an image forming device in which, depending on setting data of a destination designated by a user, data scanned by the device are attached to an email transmitted from the device to the destination or a notification mail is transmitted from the device to the destination.

**An** object of the present invention is to provide a mechanism of changing over, based on transmission destination information of an electronic mail, whether to transmit the electronic mail to which an electronic file has been attached or the electronic mail in which link information for downloading an electronic file has been described.

### SUMMARY OF THE INVENTION

To achieve the above object, **a scanning apparatus and a control method and program therefor are provided as set out in the appended claims.**

Further features of the present invention will become apparent from the following description of exemplary embodiments with reference to the attached drawings.

### BRIEF DESCRIPTION OF THE DRAWINGS

FIG. 1 is a system configuration diagram illustrating an example of a configuration of an image processing system.
FIG. 2 is a block diagram illustrating a hardware constitution of an information processing apparatus which is applicable to an authentication server 200, a mail server 100 and a client terminal 400.
FIG. 3 is a block diagram illustrating an example of a hardware constitution of a multifunction machine 300.
FIG. 4 is a block diagram illustrating a module constitution of the multifunction machine 300.
FIG. 5 is a function block diagram of the multifunction machine 300.
FIG. 6 is a function block diagram of the mail server 100 and the client terminal 400.
FIG. 7 is a view illustrating an example of a user information table to be stored in the authentication server 200.
Fig. 8 is a view illustrating a mail transmission screen.
FIG. 9 is a view illustrating the mail transmission screen on which a mail address is added.
FIG. 10 is a view illustrating a destination adding screen.
FIG. 11 is a view illustrating an address book screen.
FIG. 12 is a view illustrating the mail transmission screen on which plural mail addresses are added to the destinations.
FIG. 13 is a view illustrating a transmission completion screen.
FIG. 14 is a flow chart of a login process for the multifunction machine 300.
FIG. 15 is a flow chart of a destination adding process for the multifunction machine 300.
FIG. 16 is a flow chart of a mail transmission process being a function of the body of the multifunction machine 300.
FIG. 17 is a flow chart of a mail transmission process for a mail transmission module of the multifunction machine 300.
FIG. 18 is a flow chart of a password mail transmission process to be performed when the mail transmission module of the multifunction machine 300 transmits a link mail.
FIG. 19 is a flow chart of a link mail flag process.
FIG. 20 is a flow chart of a download process to be performed when a download instruction is generated.
FIG. 21 is a view illustrating an attachment mail. Here, it should be noted that, in the specification and the drawings, the attachment mail means a mail to which an image file has been attached.
FIG. 22 is a view illustrating a link mail.
FIG. 23 is a view illustrating an example of a text including a password.
FIG. 24 is a view illustrating a download input screen.
FIG. 25 is a view illustrating electronic data stored in an HDD (hard disk drive) 304.
FIG. 26 is a view illustrating an example of destination detailed information.
FIG. 27 is a flow chart of a mail transmission process being the function of the body of the multifunction machine 300 according to another embodiment.
FIG. 28 is a flow chart of a link mail flag process according to another embodiment.
FIG. 29 is a view illustrating a user table indicating a user who can access the multifunction machine.
FIG. 30 is a flow chart of a link mail flag process according to further another embodiment.
FIG. 31 is a view illustrating the mail transmission screen **displaying a list of destinations** to which the link mail or the attachment mail can be set.

### DESCRIPTION OF THE EMBODIMENTS

Hereinafter, exemplary embodiments of the present invention will be described in detail with reference to the attached drawings.

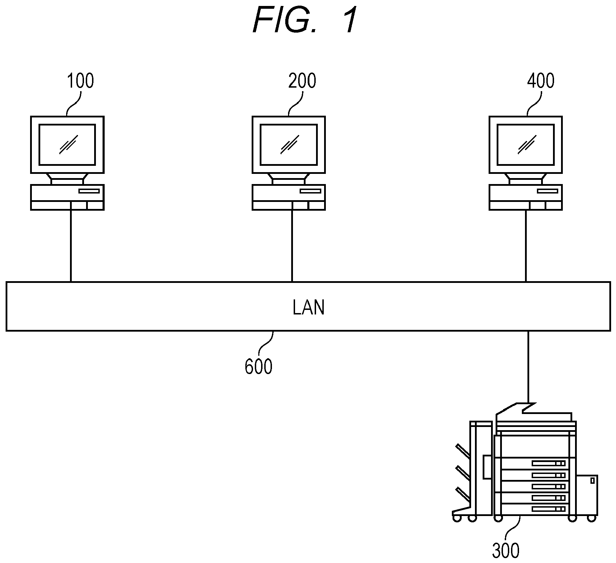

FIG. 1 is a system configuration diagram illustrating an example of a configuration of an image processing system to which a client terminal 400 (external apparatus), an authentication server 200 and a multifunction machine 300 (information processing apparatus) according to the present invention are applicable. In this system, the single or plural client terminals 400, the authentication server 200 and the single or plural multifunction machines 300 are communicably connected to others through a LAN (local area network) 600 (network).

The multifunction machine 300 has a function (scan function) for scanning a paper original and generating an image file based on the scanned paper original, and a function (mail transmission function) for transmitting a mail to which an image file has been attached to a destination designated by a user.

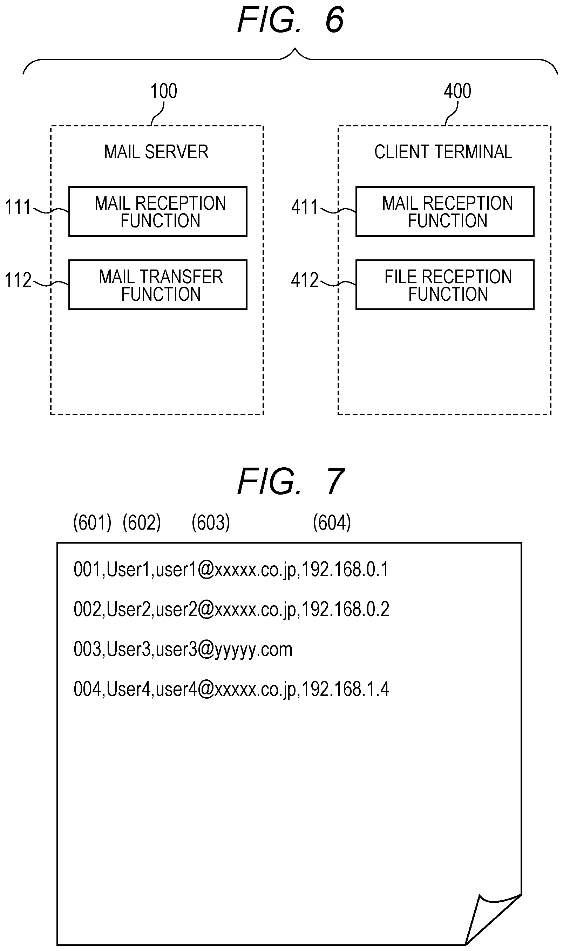

The authentication server 200 holds a user information table (definition file) on which a card ID 601 and user information (a user name 602, a mail address 603, and device restriction information 604 (i.e., an IP (Internet Protocol) address indicating the usable multifunction machine 300)) tied to the card ID as illustrated in FIG. 7 have been stored. The authentication server 200 searches for the user information corresponding to the card ID transmitted from the multifunction machine 300 by referring to the user information table, and returns, when the user information is present, the user name 602 and the mail address 603 of the relevant user information, and a response flag (authentication success) to the multifunction machine 300. In this case, the IP address of the multifunction machine is obtained by TCP/IP (Transmission Control Protocol/Internet Protocol) communication or the like, and it is then judged whether or not a user can use the multifunction machine from which the card ID was transmitted. When the IP address is coincident, and it is thus judged that the multifunction machine is usable, the user name 602 and the mail address 603 are transmitted to the multifunction machine 300. On the other hand, when the IP address is not coincident, and it is thus judged that the multifunction machine is not usable, the response flag (information indicating authentication failure) is transmitted to the multifunction machine 300. Incidentally, as the device restriction information 604, segment information may be stored in addition to the IP address of the multifunction machine 300. In this case, the user can log in to the multifunction machine 300 corresponding to the segment stored as the device restriction information 604. Further, when the IP address of the multifunction machine 300 is stored, it is possible to store plural IP addresses.

Further, although it is not illustrated, it is possible to previously store on the user information table the IP address at a time when the user logs in to a domain at the client terminal 400, transmit the stored IP address to the multifunction machine 300 when the login process at the multifunction machine succeeds, compare the IP address received by the multifunction machine 300 with the IP address held by the multifunction machine 300 itself, and transmit a link mail when the compared IP addresses belong to the same segment. That is, in addition to later-described judgment based on "From" and "To", it is possible to judge whether to transmit the link mail or the attachment mail based on the IP addresses of the client terminal 400 and the multifunction machine 300 used by the user.

The mail server 100, which has the function of a general SMTP (Simple Mail Transfer Protocol), receives a mail transmitted from the multifunction machine 300, and then transfers the received mail to the client terminal 400 at a designated mail address.

A mail client, which has been installed in the client terminal 400, can receive a mail transferred from the mail server.

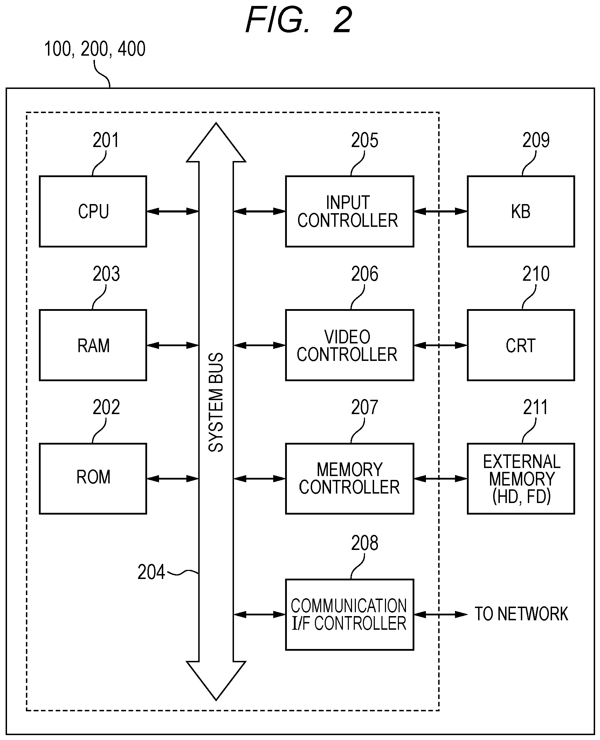

Hereinafter, a hardware constitution of the information processing apparatus which is applicable to the authentication server 200, the mail server 100 and the client terminal 400 illustrated in FIG. 2 will be described with reference to FIG. 2.

Namely, FIG. 2 is the block diagram illustrating the hardware constitution of the information processing apparatus which is applicable to the authentication server 200, the mail server 100 and the client terminal 400 illustrated in FIG. 1.

In FIG. 2, a CPU (central processing unit) 201 is used to totally control respective devices and controllers connected to a system bus 204. Incidentally, a BIOS (Basic Input/Output System) and an OS (operating system) serving as the control programs of the CPU 201, and later-described various programs necessary to achieve functions of each server or PS (personal computer) are stored in a ROM (read only memory) 202 or an external memory 211.

A RAM (random access memory) 203 serves as a main memory, a working area and the like of the CPU 201. Namely, the CPU 201 achieves various operations by loading programs and the like necessary to perform processes from the ROM 202 or the external memory 211 to the RAM 203 and then executing the loaded programs.

An input controller 205 controls inputs from a KB (keyboard) 209, not-illustrated pointing devices such as a mouse, and the like. A video controller 206 controls display on a display such as a CRT (cathode ray tube) 210. Here, although the CRT 210 is illustrated as the display in FIG. 2, of course other displays such as a liquid crystal display and the like may be used as the display, and these displays are selected and used by an administrator as necessary.

A memory controller 207 controls access to the external memory 211 such as an HD (hard disk) for storing a boot program, various applications, font data, a user file, an editing file, various data and the like, an FD (flexible disk), a CompactFlash™ memory connected to a PCMCIA (Personal Computer Memory Card International Association) card slot through an adapter, or the like.

A communication I/F (interface) controller 208, which is used to connect/communicate to/with an external device through a network (e.g., the LAN 600 illustrated in FIG. 1), performs a communication control process on the network. For example, TCP/IP communication or the like can be performed in the present embodiment.

Incidentally, the CPU 201 performs an outline font expanding (rasterizing) process to, for example, a display information region in the RAM 203, whereby display on the CRT 210 becomes possible. Further, the CPU 201 enables user instructions using a not-illustrated mouse cursor or the like on the CRT 210.

Later-described various programs for achieving the present invention have been recorded in the external memory 211, and the recorded programs are loaded onto the RAM 203 as necessary. Thus, the loaded programs are executed by the CPU 201. Also, definition files, various information tables and the like which are used when the above programs are executed have been stored in the external memory 211. In any case, these files and tables will later be described in detail.

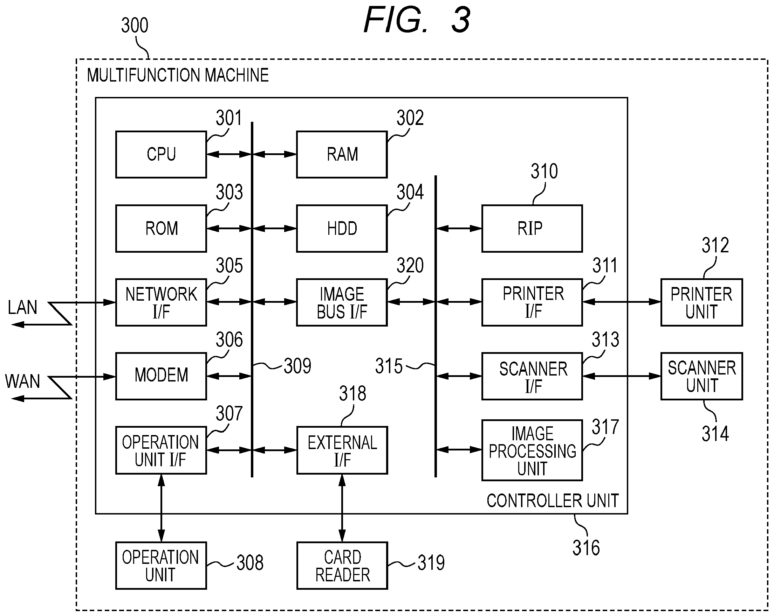

Next, a hardware constitution of the multifunction machine 300 illustrated in FIG. 1 will be described with reference to FIG. 3.

FIG. 3 is the block diagram illustrating an example of the hardware constitution of the multifunction machine 300 illustrated in FIG. 1.

In FIG. 3, a controller unit 316 is connected to a scanner unit 314 serving as an image input device and a printer unit 312 serving as an image output device, and is also connected to a LAN (e.g., the LAN 600 illustrated in FIG. 1) and a WAN (wide area network) (e.g., a PSTN (public switched telephone network), an ISDN (Integrated Services Digital Network) or the like), whereby the controller unit 316 inputs and outputs image data and device information.

In the controller unit 316, a CPU 301 serves as a processor which totally controls the system. A RAM 302 servers as a system working memory which is used for the CPU 301 to operate, serves as a program memory for recording various programs, and also serving as an image memory for temporarily storing various image data.

A ROM 303 stores therein a boot program for the system, various control programs and the like, and an HDD (hard disk drive) 304 stores therein various programs for controlling the system, various image data and the like.

An operation unit I/F 307 serves as an interface unit for an operation unit (keyboard) 308. Further, the operation unit I/F 307 transfers key information (e.g., depression of a start button) input from the operation unit 308 to the CPU 301.

A network I/F 305, which is connected to the network such as the LAN 600, inputs and outputs various data. A modem 306, which is connected to the public network such as the WAN, inputs and outputs facsimile transmission data, facsimile reception data and the like.

An external I/F 318 serves as an interface unit for accepting external inputs sent by means of a USB (universal serial bus), an IEEE1394 (Institute of Electrical and Electronics Engineers 1394), a printer port, an RS-232C (Recommended Standard 232C), or the like. In the present embodiment, a card reader 319 for reading an IC card (storage medium) of a portable terminal necessary for authentication is connected to the external I/F 318. The CPU 301 controls information reading from the IC card of the portable terminal by the card reader 319 through the external I/F 318, thereby being able to obtain the information read from the IC card of the portable terminal. The above-described devices are disposed on a system bus 309.

An image bus I/F 320 is a bus bridge for connecting the system bus 309 to an image bus 315 to be used to transfer image data at high speed, and thus converting a data structure.

The image bus 315 is constituted by a PCI (Peripheral Component Interconnect) bus or an IEEE1394 bus. Here, following devices are disposed on the image bus 315.

An RIP (raster image processor) 310 extracts vector data such as a PDL code or the like into a bitmap image. A printer I/F 311 connects the printer unit 312 and the controller unit 316 to each other, and thus performs synchronous/asynchronous conversion of image data. A scanner I/F 313 connects the scanner unit 314 and the controller unit 316 to each other, and thus performs synchronous/asynchronous conversion of image data.

An image processing unit 317 performs correction, processing and editing to input image data, and performs printer correction, resolution conversion and the like to print output image data. In addition, the image processing unit 317 performs image data rotation, compression and extraction processes to multivalued image data according to a JPEG (Joint Photographic Experts Group) format, and compression and extraction processes to binary image data according to a JBIG (Joint Bi-level Image experts Group), MMR (Modified Modified READ (Relative Element Address Designate)) or MH (Modified Huffman) format.

The scanner unit 314 converts an image on a paper original into an electrical signal as raster image data, by irradiating the image and then scanning it with a CCD (charge-coupled device) line sensor. After the paper original was set on a tray of a document feeder, when a reading start instruction by a user is issued from the operation unit 308, the CPU 301 instructs the scanner unit 314 to cause the document feeder to feed and read the paper original one by one. Then, a file of the image data obtained in the reading by the scanner unit 314 is formed, and such file data is stored in the HDD 304 or transmitted to the mail server 100 through the network I/F 305 as a mail attachment file.

The printer unit 312 is the unit for converting the raster image data into an image on a paper, in an electrophotographic method using a photosensitive drum, a photosensitive belt and the like, an inkjet method of directly printing the image on the paper by discharging inks from a micro-nozzle array, or the like. Such a print operation by the printer unit 312 is started in response to an instruction from the CPU 301. Incidentally, the printer unit 312 has plural paper feeding stages for enabling the user to select different paper sizes and/or different paper directions, and plural paper cassettes respectively corresponding to the plural paper feeding stages.

The operation unit 308 has an LCD (liquid crystal display) unit on which a touch panel sheet has been applied to display a system operation screen including various operation keys and transfer position information indicating a key depression position to the CPU 301 through the operation unit I/F 307. Here, the operation keys provided on the operation unit 308 include, for example, a start key, a stop key, an ID key, a reset key, and the like.

Incidentally, display performance of the display unit is different according to a type of the multifunction machine. The present invention is directed to the multifunction machine which can be operated through a touch panel, that is, a printer which is simply equipped with a liquid crystal screen to display character strings (a printing state, a name of document being printed, and the like).

Here, the start key on the operation unit 308 is used to start the reading operation of the original image. Two LEDs (light-emitting diodes) consisting of green and red LEDs are provided at the center of the start key, so as to indicate based on a color thereof whether the start key is in a usable state. The stop key on the operation unit 308 is used to stop the operation which is being performed, the ID key on the operation unit 308 is used to input the user ID of the user, and the reset key is used to initialize the setting from the operation unit.

Under the control of the CPU 301, the card reader 319 reads the information (the card ID and the like) stored on the IC card provided within the portable terminal, and notifies the CPU 301 of the read information through the external I/F 318.

By the above constitution, the multifunction machine 300 can transmit the image data read from the scanner unit 314 to the LAN 600, and also print-output the print data received from the LAN 600 by the printer unit 312.

Moreover, the multifunction machine 300 can facsimile-transmit the image data read from the scanner unit 314 to the WAN by the modem 306, and also output the image data facsimile-received from the WAN by the printer unit 312.

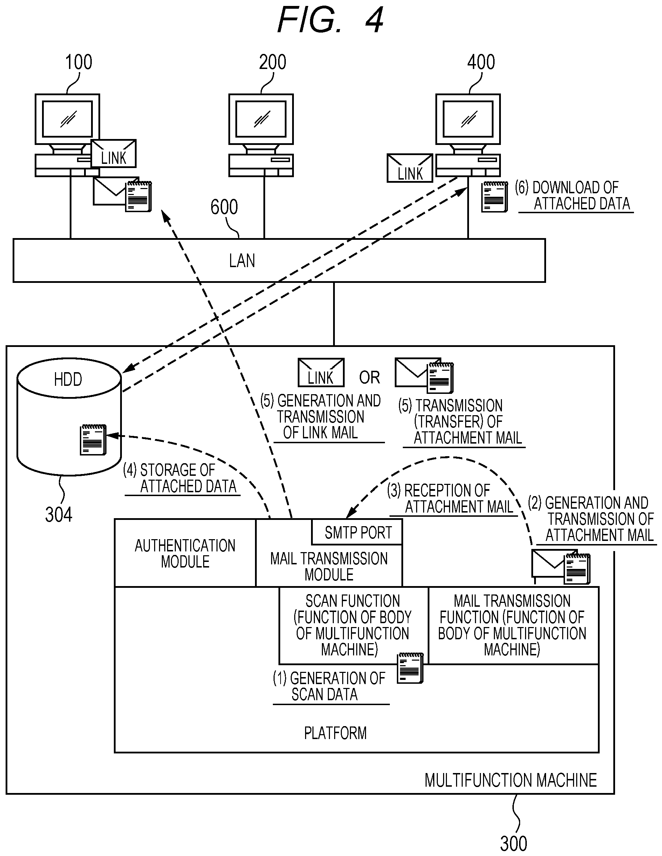

Subsequently, an outline of the process of the image processing system will be described with reference to FIG. 4 which is a block diagram illustrating a module constitution of the multifunction machine 300. Incidentally, it should be noted that a function of each of modules and platform are executed by the CPU 301.

The multifunction machine 300 has the platform such as an operating system and the like, and the platform has the scan function and the mail transmission function as the functions of the body of the multifunction machine 300. Further, the platform has an authentication module and a mail transmission module respectively operating on the platform. It should be noted that the authentication module and the mail transmission module are programs (software) capable of being arbitrarily installed in the multifunction machine 300.

The scan function is to read the image on the original by the scanner unit 314, and generate the image file based on the read image. The generated image file is attached to the mail by the mail transmission function, and transferred to the mail transmission module through a local host connection. Incidentally, addresses of a transmission destination (To) and a transmission source (From) are set by the mail transmission function, and the mail to which the image file is attached is generated. Here, the user's mail address received from the authentication server 200 when the user logs in to the multifunction machine 300 is set to the transmission source (From).

The mail transmission module opens a 25-th port in an SMTP port, and receives (obtains) the mail output from the mail transmission function through the SMTP port. Further, the mail transmission module judges whether to transmit the link mail or to transmit an attachment mail by comparing the addresses of the transmission destination (To) and the transmission source (From) of the obtained mail with each other. More specifically, when the transmission source (From) and the transmission destination (To) coincide with each other, that is, when the mail address of the user who logged in to the multifunction machine 300 is set to both the transmission source (From) and the transmission destination (To), the user can obtain the image file by accessing the multifunction machine 300. Therefore, the image file attached to the mail is obtained, and stored in the HDD 304. Then, the link mail for downloading the image file is generated, and transmitted to the mail server 100. In this case, the address of the transmission destination (To) is the same as the address of the transmission source (From). On the other hand, when the transmission source (From) and the transmission destination (To) do not coincide with each other, that is, when the mail address of the user who logged in to the multifunction machine 300 is set to the transmission source (From) and a mail address different from the mail address of the user who logged in to the multifunction machine 300 is set to the transmission destination (To), there is a case where the user of which the mail address has been set to the transmission destination (To) cannot access the multifunction machine 300 to obtain the image file. Therefore, the mail obtained from the mail transmission function is transmitted to the mail server 100 with the image file attached.

Incidentally, in addition to local host connection, in a case where a mail is transmitted from an external terminal having an IP address different from the IP address of the multifunction machine 300 to the mail transmission module, it is controlled not to receive the relevant mail.

The mail server 100 receives the link mail or the attachment mail from the multifunction machine 300, and transmits the received mail to the client terminal 400.

The client terminal 400 receives the link mail or the attachment mail. When the link mail is received, the image file stored in the multifunction machine 300 is downloaded by using the link information described in the mail. Incidentally, when the image file is downloaded, for example, the download is started according to the user's operation of designating the link information described in the mail, and the image file is downloaded from the multifunction machine 300 to the client terminal 400.

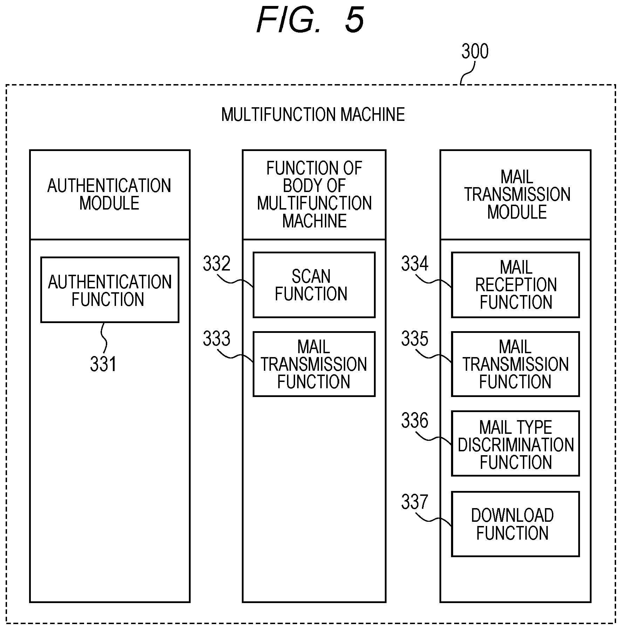

Subsequently, functions of the respective terminals according to the present embodiment will be described with reference to FIGS. 5 and 6. Here, FIGS. 5 and 6 are the block diagrams for describing the functions of the various terminals and the apparatus.

FIG. 5 is the function block diagram of the multifunction machine 300. Here, each of the functions illustrated is performed by the CPU 301.

An authentication function 331 reads the card ID of the user who logs in through the card reader 319 mounted on the multifunction machine 300, transmits an authentication request packet including the card ID to a user information response function (not illustrated) of the authentication server 200, obtains a response flag in the response packet returned by the user information response function of the authentication server 200, displays a message indicating a failure of authentication to the user when the response flag indicates the failure of authentication, and ends the process. On the other hand, when the response flag indicates a success of authentication, the authentication function obtains the user information (for example, the user name 602 and the mail address 603 illustrated in FIG. 7) in the response packet, and generates login information including the user name 602 and the mail address 603 being the user information. Since the login information is managed by the platform, the function of the body of the multifunction machine and the module operating on the platform can refer to the login information. Incidentally, when the login information is generated, information indicating the login is notified to the mail transmission module.

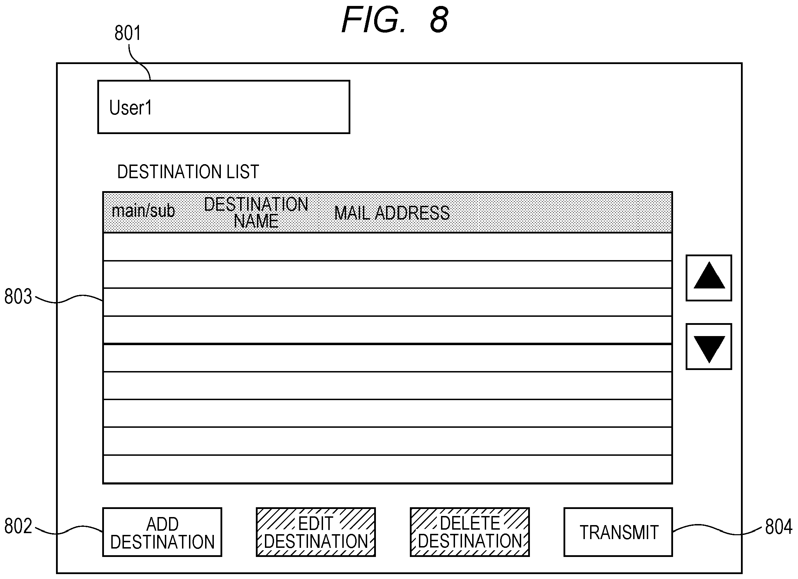

A scan function 332 generates the image file by scanning the paper original with the scanner unit 314. Here, the scan function 332 has destination setting screens as illustrated in FIGS. 8, 9, 10, 11, 12 and 13, whereby the mail transmission destination information and detailed attachment information for each transmission destination are set on these screens. Moreover, the obtained image file is once stored in the HDD.

A mail transmission function 333 attaches the image file stored in the HDD to the mail for each transmission destination information (mail address) set by the scan function 332, and transmits the obtained mail to a mail reception function 334 of the mail transmission module. Incidentally, although the mail transmission function 333 designates a server host name using the mail transmission module as the SMTP server and transmits the attachment mail to the 25-th port of the SMTP port in the local host connection, the mail transmission function 333 may transmit the attachment mail to the mail transmission module through the network (LAN).

The mail reception function 334, which has an ordinary SMTP server function, receives the mail transmitted from the mail transmission function 333. Incidentally, the mail transmission module opens the 25-th port of the SMTP port to receive the mail, and actually receives the mail through the relevant SMTP port.

A mail transmission function 335 transmits the attachment mail received by the mail reception function 334 to a mail reception function 111 of the mail server 100 by using an SMTP command.

A mail type discrimination function 336 judges, when the mail is transmitted by the mail transmission function 335, whether to transmit the attachment mail or transmit the link mail, according to the addresses of the transmission source (From) and the transmission destination (To). More specifically, when the transmission source (From) and the transmission destination (To) coincide with each other, the link mail is generated, and the generated link mail is transmitted by the mail transmission function 335. On the other hand, when the transmission source (From) and the transmission destination (To) do not coincide with each other, the attachment mail received by the mail reception function 334 is transmitted by the mail transmission function 335.

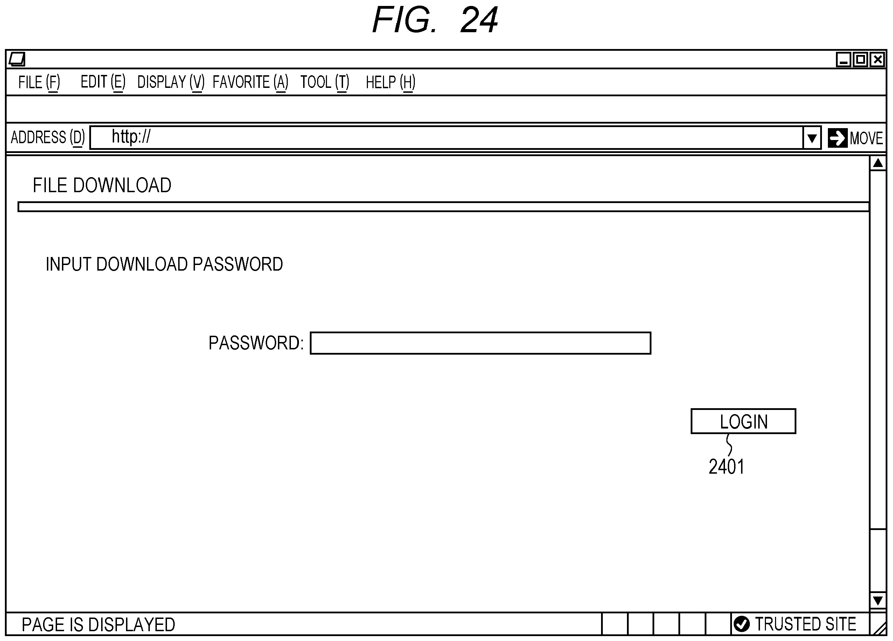

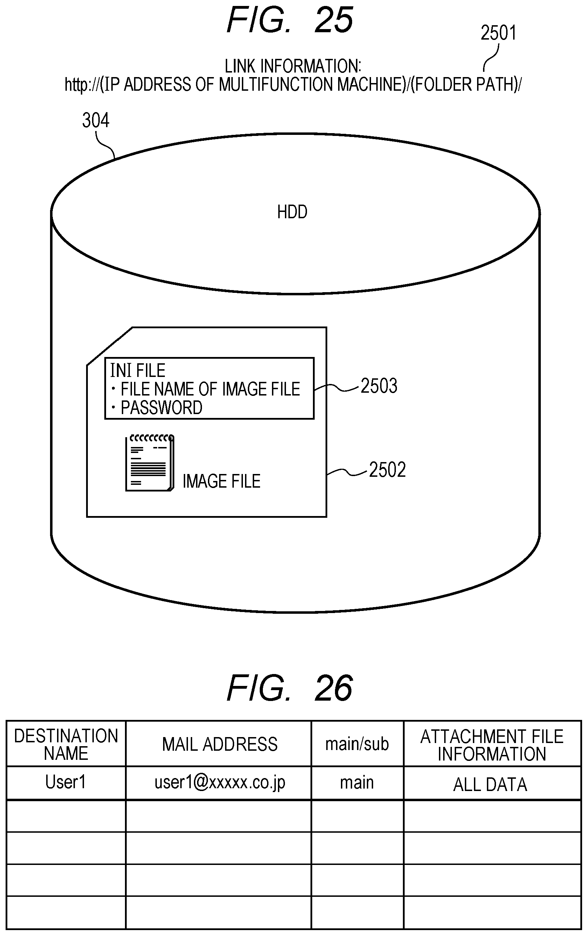

A download function 337 transmits a download screen of FIG. 24 to be displayed on the client terminal, in response to a request from the client terminal 400. When the passwords are coincident, the download function 337 transmits, to the client terminal 400, the image file requested from the client terminal 400. Incidentally, when the image file is transmitted, an INI file 2503 (an information file illustrated in FIG. 25) is referred from a folder path included in the link information, the image file is obtained, and the obtained image file is transmitted to the client terminal 400 from which the download was requested.

FIG. 6 is the function block diagram of the mail server 100 and the client terminal 400. Here, the functions of the mail server 100 are performed by the CPU 201 of the mail server 100, and the functions of the client terminal 400 are performed by the CPU 201 of the client terminal 400.

Initially, the functions of the mail server 100 will be described. The mail reception function 111, which has the ordinary SMTP server function, receives the mail transmitted from the mail transmission function 335 of the multifunction machine 300. A mail transfer function 112, which has the ordinary SMTP server function, transfers the mail received by the mail reception function 111 to a mail reception function 411 of the client terminal 400 corresponding to the mail address of the transmission destination.

Next, the function of the client terminal 400 will be described.

The mail reception function 411 is the function of mail client software which can receive the mail transferred from the mail server 100 (SMTP server). Namely, the mail reception function 411 can receive the mail transmitted from the SMTP server, and thus obtain the image file attached to the received mail.

Subsequently, the user information table stored in the authentication server 200 will be described with reference to FIG. 7. The user information table, which is stored in the external memory 211 of the authentication server 200, can be achieved by various forms such as a definition file, a database, and the like. In the present embodiment, the information is held as the comma-delimited definition file.

As illustrated in FIG. 7, the user information table includes the card ID 601, the user name 602, the mail address 603 and the client IP address (device restriction information) 604 in a comma-delimited manner.

The card ID 601 is the information which is unique for each card. For example, a product serial number or the like is presented by an IC card or the like as the card ID 601. The user name 602 is the information for indicating the authenticated user name (user ID), and the mail address 603 is the information for indicating the mail address of the authenticated user (i.e., the user of the multifunction machine 300). The device restriction information 604 is the information for specifying the multifunction machine that the user corresponding to the user name 602 can use (login). More specifically, one or plural IP addresses of the multifunction machines 300 are stored as the device restriction information. In case of enabling the user to log in to all the multifunction machines 300, a null value is stored as the device restriction information. Incidentally, as described above, the segment information indicating the area of the multifunction machine 300 to which the user can log in may be stored as the device restriction information.

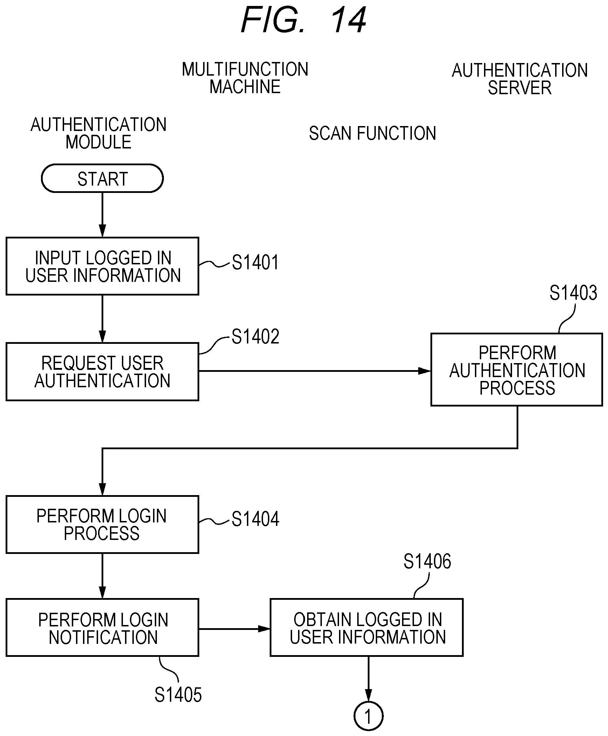

Subsequently, flow charts illustrated in FIGS. 14, 15, 16, 17, 18 and 19 respectively indicating detailed processes according to the present embodiment will be described with reference to FIGS. 7 to 13. Here, FIGS. 8 to 13 respectively illustrate examples of the screens to be displayed on the display of the operation unit 308 provided on the multifunction machine 300.

Initially, the login process of the multifunction machine 300 will be described with reference to FIG. 14. Here, it should be noted that respective processes in steps S1401, S1402, S1404, S1405 and S1406 are performed by the CPU 301 of the multifunction machine 300, and a process in a step S1403 is performed by the CPU 201 of the authentication server 200.

In the step S1401, when a card is passed over the card reader 319 mounted on the multifunction machine 300, an input of the card ID from the card reader 319 is accepted by the authentication function 331 of the multifunction machine 300. Although the authentication is performed using the card ID in the present embodiment, it is also possible to accept an input of, other than the card ID, logged in user information including a user name and a password and perform the authentication based on the accepted logged in user information. In other words, an input of user discrimination information such as the card ID or the like capable of discriminating the user is accepted.

In the step S1402, a user authentication request packet which includes an authentication request flag and the card ID obtained by the authentication function 331 is generated for the user authentication, and the generated packet is transmitted to the authentication server 200.

In the step S1403, the authentication request packet transmitted from the multifunction machine 300 is received by the user information response function of the authentication server 200, and the card ID is obtained from the received authentication request packet. Then, the corresponding user is searched for in the user information table (FIG. 7) by using the obtained card ID as a key, the user name 602 and the mail address 603 both illustrated in FIG. 7 are obtained, an authentication response packet including the user name 602 and the mail address 603 is generated, and the generated authentication response packet is transmitted to the multifunction machine 300. Incidentally, when the user could be searched, the authentication response packet which includes the response flag indicating a success of authentication is transmitted. On the other hand, when the user could not be searched, the authentication response packet which includes the response flag indicating a failure of authentication is transmitted. Further, when the multifunction machine is coincident with the device restriction information, the authentication response packet which includes the response flag indicating a success of authentication is transmitted. On the other hand, when the multifunction machine is not coincident with the device restriction information, the authentication response packet which includes the response flag indicating a failure of authentication is transmitted.

In the step S1404, the authentication response packet is received from the authentication server 200, and the user information indicating the user name and the mail address is obtained from the received packet by the authentication function 331. Then, the login information is generated based on the obtained user information, and the generated login information is set to a login context which is managed by the platform.

In the step S1405, a success of login is notified from the platform to the scan function 332. Incidentally, in the present embodiment, since it is judged based on the mail transmission destination information whether to transmit the link mail or transmit the attachment mail, the success of login is not notified to the mail transmission module. However, it is of course possible to notify the mail transmission module of the success of login.

In the step S1406, the user name and the mail address in the login information are obtained and stored in the RAM 302 by the scan function 332 (that is, the mail address of the user is obtained).

Incidentally, although the authentication is performed by using the authentication server 200 in the present embodiment, it is also possible to provide the function of the authentication server within the multifunction machine 300 and thus perform the authentication process in the multifunction machine 300. In this case, the user information table illustrated in FIG. 7 is stored in the HDD 304 of the multifunction machine 300, so that the authentication module performs the authentication process by referring to the stored user information table.

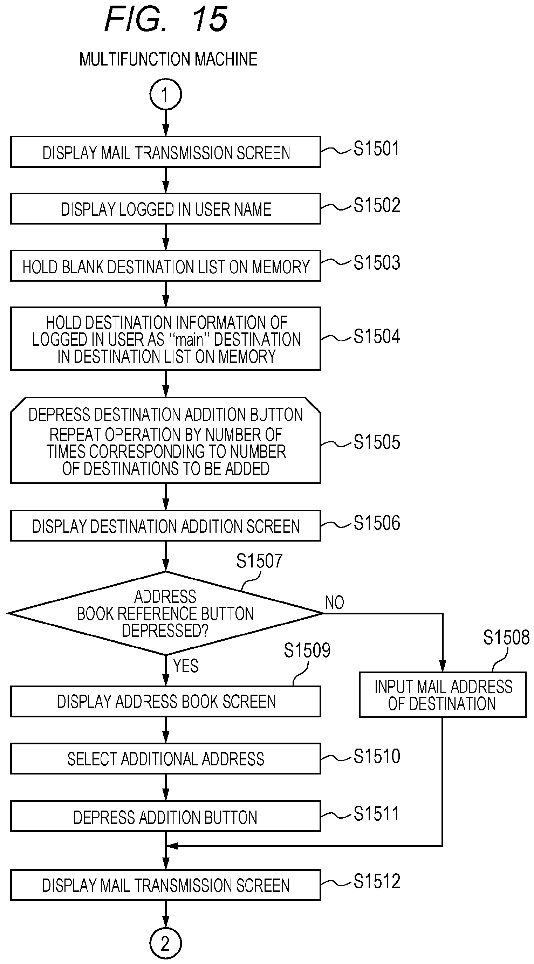

Subsequently, a destination adding process for mail transmission in the multifunction machine 300 will be described with reference to FIG. 15. Here, it should be noted that respective processes in steps S1501, S1502, S1503, S1504, S1505, S1506, S1507, S1508, S1509, S1510, S1511 and S1512 are performed by the CPU 301 of the multifunction machine 300.

In the step S1501, the authentication succeeds by the input of the card ID or the input of the user name and the password, and the user logs in to the multifunction machine 300. Then, the mail transmission screen as illustrated in FIG. 8 is displayed on the display unit of the multifunction machine 300 by the scan function 332. Here, the mail transmission screen illustrated in FIG. 8 includes a user name display section 801 for displaying the user name stored in the RAM 302, a destination adding button 802 for adding the destination, a destination list 803 for displaying the added destination, and a transmission button 804 for transmitting the mail.

In the step S1502, the user name stored in the RAM 302 is displayed in the user name display section 801 of the mail transmission screen by the scan function 332.

In the step S1503, a blank list to be used to store the mail transmission destination is generated and stored (held) in the RAM 302 by the scan function 332.

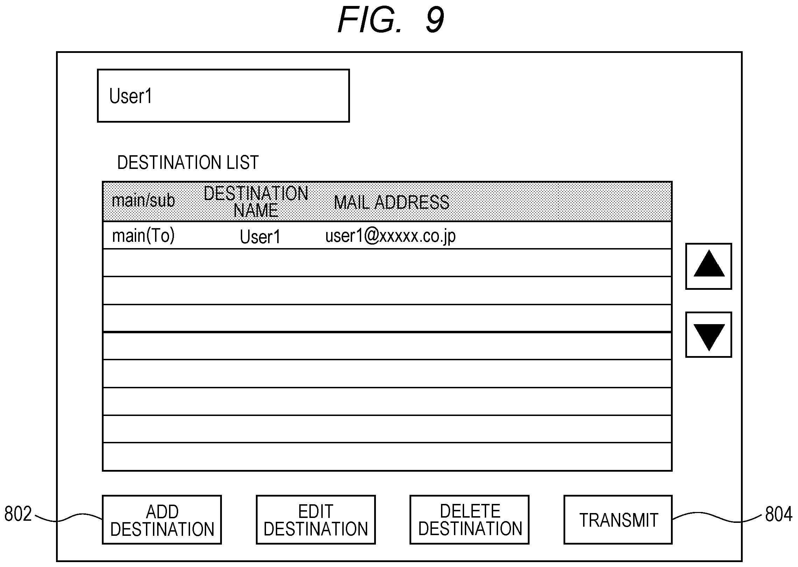

In the step S1504, the mail address of the logged in user stored in the RAM 302 is stored as a main address in the blank address list generated in the step S1503 by the scan function 332. More specifically, the mail address is stored as destination detailed information (FIG. 26) in the RAM 302 without user's destination adding instruction. In this regard, "all data" are held as attachment file information in the destination detailed information. An example of the screen on which the mail address of the logged in user has been added (set) is illustrated in FIG. 9.

Incidentally, the mail address of the logged in user is automatically added to the address in the present embodiment. However, it is also possible to provide "an adding button for adding user oneself to address" on the screen illustrated in FIG. 9, and add the mail address of the logged in user to the destination when this button is depressed by a user.

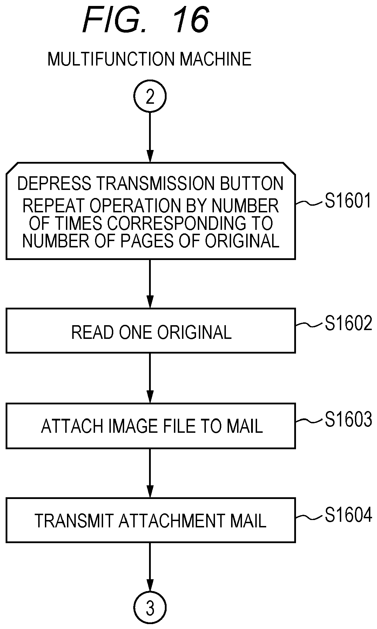

In the step S1505, depression of the destination adding button 802 is detected. When plural destinations are added (when the destination adding button 802 is depressed), the processes in the steps S1506, S1507, S1508, S1509, S1510, S1511 and S1512 are repeatedly performed for each destination. Incidentally, when plural destinations are not added (when the destination adding button 802 is not depressed but the transmission button 804 is depressed), the processes in steps S1506, S1507, S1508, S1509, S1510, S1511 and S1512 are omitted, and the process illustrated in FIG. 16 is performed.

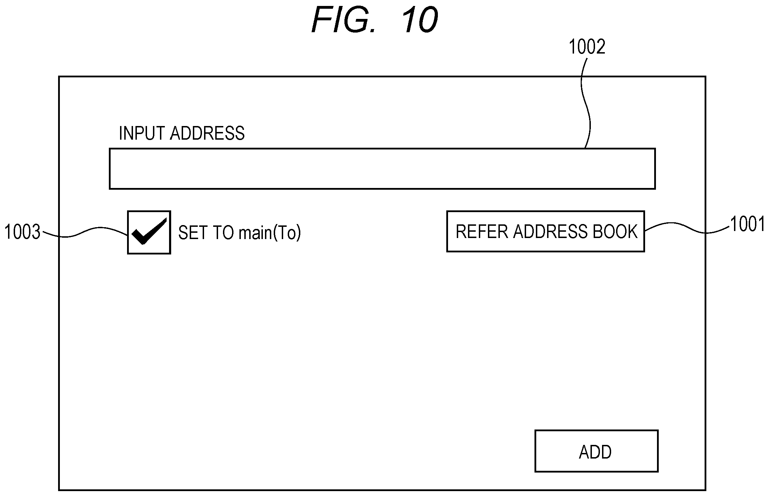

In the step S1506, after the depression of the destination adding button 802 was detected, the destination adding screen illustrated in FIG. 10 is displayed by the scan function 332.

In the step S1507, it is judged whether or not an address book reference button 1001 is depressed by the user to add the destination. When it is judged that the address book reference button 1001 is depressed, the process advances to the step S1509. On the other hand, when it is judged that the address book reference button 1001 is not depressed but an address input section 1002 is designated, the process advances to the step S1508.

In the step S1508, an input of the address (half-width alphanumeric character) designated according to a user's operation is accepted by the scan function 332. More specifically, a character string of the address input and displayed on the touch panel of the display unit of the multifunction machine 300 is accepted according to user's designation.

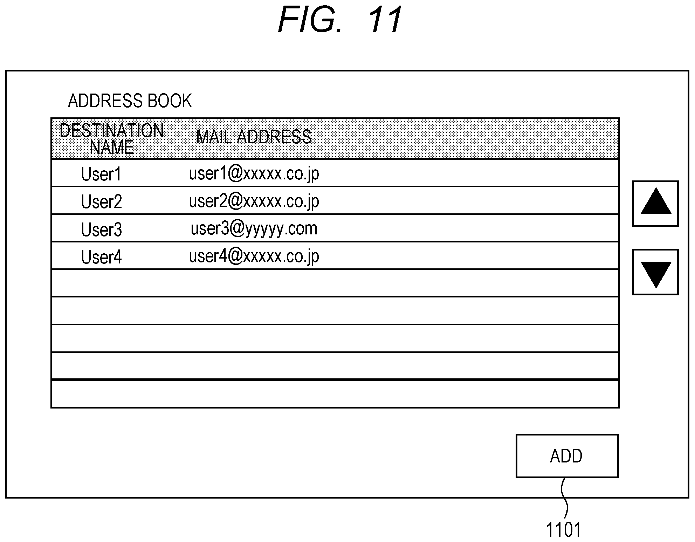

In the step S1509, the address book screen illustrated in FIG. 11 is displayed by the scan function 332 in response to the depression of the address book reference button 1001. Here, the destination names and the mail addresses to be displayed on the address book screen have previously been stored as address book files in the HDD 304 of the multifunction machine 300. Although the destination name and the mail address to be displayed on the address book screen have previously been stored as the address book files in the present embodiment, it is also possible to previously store the information of the address book in an external server such s the authentication server 200 or the like, and periodically download the information from the external server such as the authentication server 200 or the like. Alternatively, it is possible to receive the destination name and the mail address from the external server when the address book reference button 1001 is depressed.

In the step S1510, the address of the destination added by the scan function 332 is selected according to a user's instruction. In case of referring to the address book, when the plural destinations are selected on the address book screen illustrated in FIG. 11, it is possible to add the plural destinations in a lump.

In the step S1511, it is detected by the scan function 332 that an adding button 1101 is depressed by a user's operation, and the process advances to the step S1512.

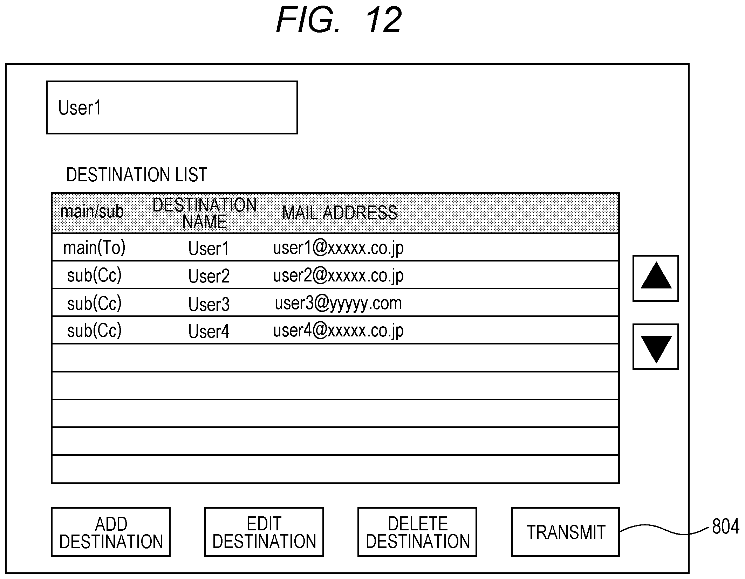

In the step S1512, the mail address accepted in the step S1508 or the destination (destination name and mail address) selected in the step S1510 is displayed on the mail transmission screen by the scan function 332. An example of the mail transmission screen on which the destination has been added is illustrated in FIG. 12. Incidentally, when a "main" switching button 1003 illustrated in FIG. 10 is designated, "main/sub" is set to "main". In a default state, there is no check in the "main" switching button 1003, and "sub" is set. Further, the destination has been stored in the RAM 302.

Subsequently, a mail transmission process by the mail transmission function 333 provided as the function of the body of the multifunction machine 300 will be described with reference to FIG. 16. Here, it should be noted that respective processes in steps S1601, S1602, S1603 and S1604 are performed by the CPU 301 of the multifunction machine 300.

In the step S1601, it is detected by the scan function 332 whether or not the transmission button 804 is depressed. When it is detected that the transmission button 804 is depressed, the process in the step S1602 is repeatedly performed by the number of times corresponding to the number of pages of the original to be scanned.

In the step S1602, the original is scanned (original reading) and an image file is generated by the scan function 332.

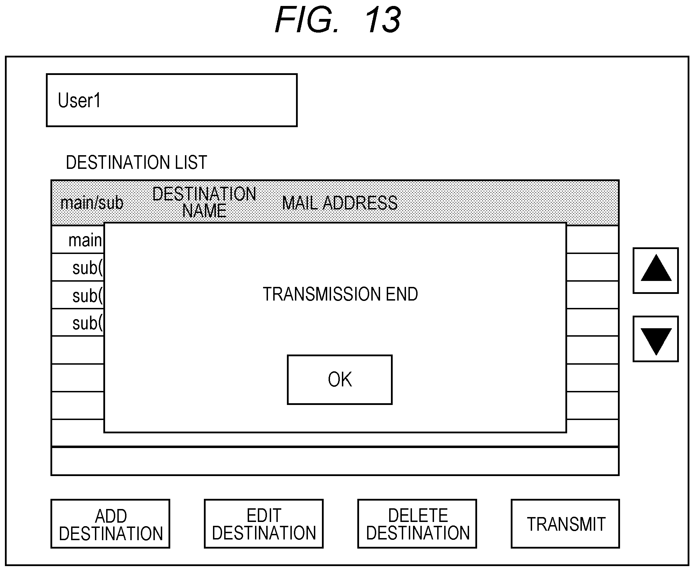

In the step S1603, the scanned images of all the pages scanned are obtained to generate the image file being one file, by the scan function 332. A new mail is generated, and the mail address of the logged in user obtained in the step S1406 is set as the transmission source (From) of the mail (transmission source setting) by the mail transmission function 333. Further, the mail address of "main" stored in the RAM 302 is obtained as the destination of the mail, and the obtained mail address is set to the transmission destination (To) (transmission destination setting). Also, the mail address of "sub" stored in the RAM 302 is obtained, and the obtained mail address is set to the transmission destination (Cc) (transmission destination setting). Furthermore, the image file stored in the HDD 304 is attached to the mail. In the step S1604, the transmission source and the transmission destination are set, and the attachment mail is transmitted (output) to the transmission module through the local host connection by the mail transmission function 333. When the transmission is completed, the transmission completion screen illustrated in FIG. 13 is displayed. Incidentally, a document arbitrarily designated by the administrator and a document previously set are inserted into a mail text.

Further, order of the setting of the mail address and the setting of the attachment of electronic data is arbitrarily determined when the new mail is generated.

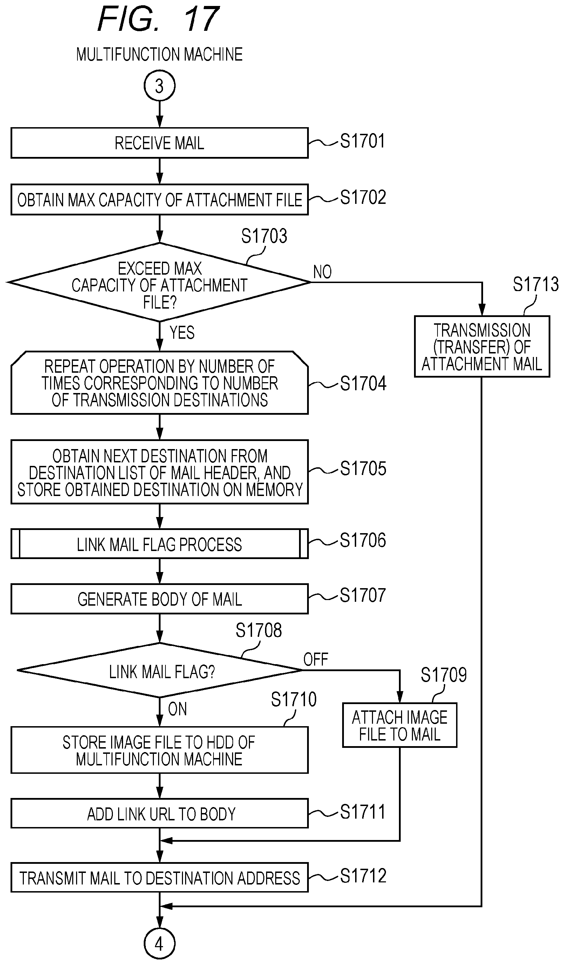

Subsequently, the mail transmission process by the mail transmission module of the multifunction machine 300 will be described with reference to FIG. 17. Here, it should be noted that respective processes in steps S1701, S1702, S1703, S1704, S1705, S1706, S1707, S1708, S1709, S1710, S1711 and S1712 are performed by the CPU 301 of the multifunction machine 300.

In the step S1701, the attachment mail is received from the mail transmission function 333 through the SMTP port by the mail reception function 334 (electronic mail obtaining). Namely, the process in this step is the process of obtaining the electronic mail in which the mail address of the logged in user is set to the transmission source (e.g., From) and the mail address of the user provided with the image file is set to the transmission destination (e.g., To) and to which the image file is attached.

In the step S1702, a value of the maximum capacity of the attachment file previously set in the mail transmission module is obtained by the mail reception function 334 (size obtaining). Here, it should be noted that the value of the maximum capacity of the attachment file can arbitrarily be changed by the administrator.

In the step S1703, it is judged by the mail reception function 334 whether or not an attachment file size (image file size) of the attachment mail received in the step S1701 exceeds the value (size) of the maximum capacity of the attachment file obtained in the step S1702 (size judgment). When it is judged that the attachment file size exceeds the value (size) of the maximum capacity, the process advances to the step S1704 to store the image file, not the mail to which the image file has been attached, in the multifunction machine 300, and transmit the link mail in which the link information for downloading the stored image file has been described. On the other hand, when it is judged that the attachment file size does not exceed the value (size) of the maximum capacity (size or smaller), the process advances to a step S1713 to attach the image file to the mail and transmit the obtained mail. Incidentally, when it is judged that the attachment file size exceeds the value (size) of the maximum capacity, it may be considered as a case where the attachment file size is equal to or larger than the size, and, when it is judged that the attachment file size does not exceed the value (size) of the maximum capacity, it may be considered as a case where the attachment file is lower than the size. That is, it may be judged whether or not the attachment file size exceeds a predetermined value (predetermined size).

Further, even when the size of the attachment file (image file) does not exceed the value of the maximum capacity, it is possible, for the purpose of reducing transmission of the attachment mail, to set, in the setting of the mail transmission module, the value (size) of the maximum capacity to a null value, "9999999" or the like so as to advance the process to the step S1704 even in the case where the size is small.

In the step S1704, the process from the step S1705 to the step S1712 is repeatedly performed by the number of times corresponding to the number of the destinations set in the attachment mail received by the mail reception function 334.

In the step S1705, the destination list is obtained, by the mail type discrimination function 336, from the mail header information of the attachment mail received in the step S1701. Further, the obtained destination is held on the RAM 302. Then, the destination is obtained one by one from the destination list held on the RAM 302.

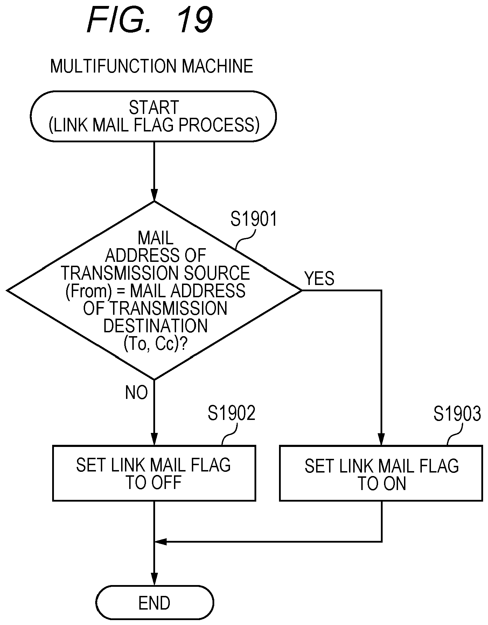

In the step S1706, it is judged by the mail type discrimination function 336 whether to transmit the mail as the link mail or transmit the mail as the attachment mail. Here, the judged result (i.e., "ON" or "OFF" of a link mail flag) is associated with each destination in the destination list held on the RAM 302 and then managed. Incidentally, the detail of the process in the step S1706 will be described with reference to the flow chart illustrated in FIG. 19.

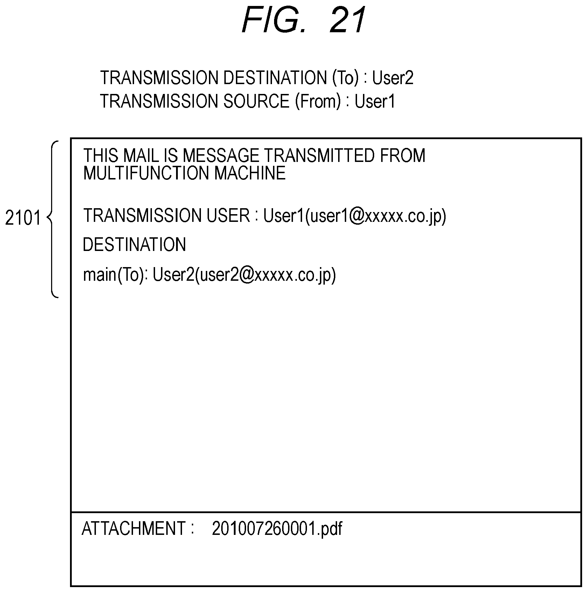

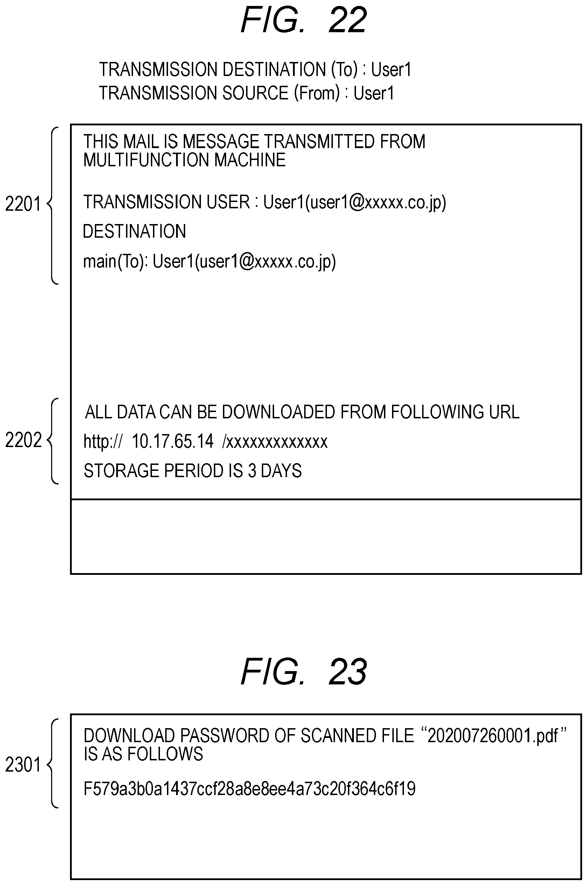

In the step S1707, a mail text to be transmitted is generated by the mail type discrimination function 336. More specifically, the mail text includes a comment 2101 as illustrated in FIG. 21 and comments 2201 and 2202 as illustrated in FIG. 22. Incidentally, the mail address obtained from the transmission source "From" of the attachment mail received in the step S1701 is described to "transmission user", and the mail address obtained from the transmission destination "To" or "Cc" of the attachment mail received in the step S1701 is described to "destination".

In the step S1708, it is judged by the mail type discrimination function 336 whether the link mail flag determined in the step S1706 is "ON" or "OFF". When it is judged that the link mail flag is "ON", the process advances to the step S1710 to transmit the link mail. On the other hand, when it is judged that the link mail flag is "OFF", the process advances to the step S1709 to transmit the attachment mail.

In the step S1709, by the mail type discrimination function 336, a new mail is generated, the attachment file, i.e., the image file, of the attachment mail received in the step S1701 is attached to the generated new mail, the mail text generated in the step S1707 is inserted into the new mail, the mail address of the transmission source "From" of the attachment mail received in the step S1701 is set to the transmission source "From" of the new mail, and the transmission destination information (mail address) obtained in the step S1705 is set to the transmission destination "To" of the new mail. Further, an arbitrary character string is set to the subject. Incidentally, although the new mail is generated in the present embodiment, it is also possible to edit the attachment mail received in the step S1701 to change the mail text and/or the destination. That is, the process in this step is the process of transmitting the mail to which the image file has been attached, when the mail addresses of the transmission source and the transmission destination are not coincident.

In the step S1710, the image file attached to the attachment mail received in the step S1701 is obtained by the mail type discrimination function 336, and the obtained image file is stored in the HDD 304 of the multifunction machine 300 (storage). When, the image file is stored in the HDD 304, a new folder 2502 is created, and the image file is stored in the created new folder 2502, as illustrated in FIG. 25. That is, the process in this step is the process of storing the image file attached to the mail to the folder of the HDD 304 for enabling the client terminal to download, when the mail addresses of the transmission source and the transmission destination are coincident.

Then, an INI file 2503 (information file) in which the file name of the stored image file has been described is generated and stored. Further, a password generated in a later-described step S1805 is described to the INI file 2503. Incidentally, the stored image file is deleted after elapsing of a predetermined period.

In the step S1711, link information 2501 (e.g., URL (Uniform Resource Locator)) for downloading the electronic data by accessing the multifunction machine 300 is generated, by the mail type discrimination function 336, from the path of the folder 2502 of the storage destination of the image file stored in the step S1710 and the IP address of the multifunction machine 300. Incidentally, for example, as the folder path of the link information 2501, a hash generated using the folder path may be used for security reason.

The new mail is generated, the text generated in the step S1707 and the link information generated in this step are inserted into the generated new mail, the mail address of the transmission source "From" of the attachment mail received in the step S1701 is set to the transmission source "From" of the new mail, and the mail address of the transmission destination obtained in the step S1705 is set to the transmission destination "To" of the new mail. Although the new mail is generated in the present embodiment, it is also possible to edit the attachment mail received in the step S1701 to change the mail text and/or the destination.

In the step S1712, the mail generated in the step S1709 or the step S1711 is transmitted to the mail server 100 by the mail transmission function 335 (first transmission). The example of the mail generated in the step S1709 is illustrated in FIG. 21, and the example of the mail generated in the step S1811 is illustrated in FIG. 22. In each of FIGS. 21 and 22, the information necessary for transmission/reception is set to the header portion. That is, the process in this step is the process of transmitting the mail in which the link information including the storage location of the image file has been described to download the held (stored) image file from the client terminal (information processing apparatus).

In the step S1713, the attachment mail received in the step S1701 is transmitted (transferred) to the mail server 100 as it is (that is, while the image file is being attached to the mail). Incidentally, as well as the step S1709, it is also possible to transmit the new attachment mail by newly creating the mail, setting the mail address, inserting the mail text, setting the subject, and attaching the electronic data to the mail.

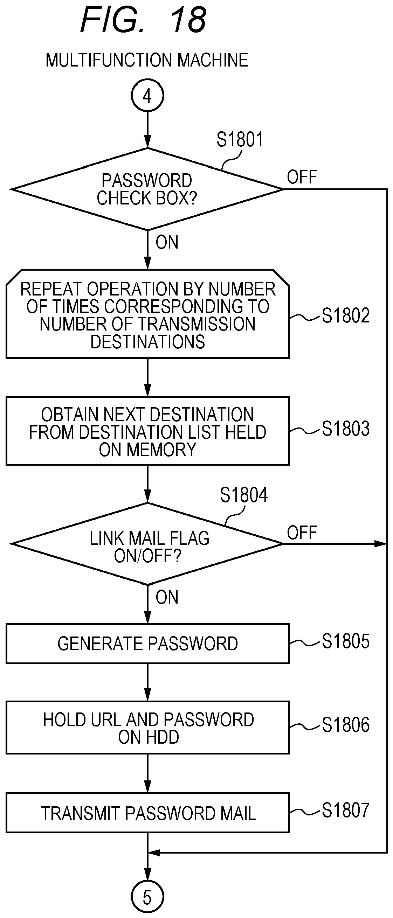

Subsequently, a password mail transmission process to be performed when the mail transmission module of the multifunction machine 300 transmits the link mail will be described with reference to FIG. 18. Here, it should be noted that respective processes in steps S1801, S1802, S1803, S1804, S1805, S1806 and S1807 are performed by the CPU 301 of the multifunction machine 300.

In the step S1801, setting information for setting whether or not to perform password transmission previously set in the mail transmission module is obtained, and it is judged based on the obtained setting information whether or not to perform the password transmission. When it is judged to perform the password transmission, the process advances to the step S1802. On the other hand, when it is judged not to perform the password transmission, the process ends immediately.

In the step S1802, the processes in the steps S1803 to S1807 are repeatedly performed by the number of times corresponding to the number of destinations held on the RAM 302 in the step S1704.

More specifically, in the step S1803, by the mail transmission function 335, the destination and the link mail flag are obtained each one by one from the destination list which was held on the RAM 302 in the step S1704 and in which the link mail flag was stored in the step S1706.

In the step S1804, it is judged by the mail transmission function 335 whether the obtained link mail flag is "ON" or "OFF". When it is judged that the link mail flag is "ON", the process advances to the step S1805 because **the link mail was transmitted** in the step S1712. On the other hand, when it is judged that the link mail flag is "OFF", the processes in the steps S1805 to S1807 are skipped because the attachment mail generated in the step S1709 was transmitted in the step S1712.

In the step S1805, the password (permission information) for permitting the download of the image file using the link information is generated as a hash based on a time stamp and the like by the mail transmission function 335 (password generation).

In the step S1806, the password is stored in the INI file 2503 by the mail transmission function 335 so as to associate the password generated in the step S1805 with the link information. Thus, when the download of the image file is requested using the link information, the folder 2502 is specified, whereby it is possible to obtain the password from the INI file 2503 stored in the folder 2502. Consequently, it is possible to judge whether or not the obtained password and a later-described password received from the client terminal 400 are coincident.

In the step S1807, a new mail is created by the mail transmission function 335, a message (2301 in FIG. 23) including the password generated in the step S1805 is inserted into the text of the new mail, the mail address of the transmission source (From) of the attachment mail received in the step S1701 is set to the transmission source (From) of the new mail, and the mail address of the transmission destination obtained in the step S1803 is set to the transmission destination (To) of the new mail. Then, the obtained new mail (password mail) is transmitted to the mail server 100 (second transmission).

Incidentally, although it is permitted using the password to obtain the electronic data in the present embodiment, it is also possible, even if the password is not used, to request the user name and the password to the client terminal 400 when the user accesses the multifunction machine 300 according to the link information. In this case, the user name and the password input by the user's operation from the client terminal 400 are obtained by the multifunction machine 300, and it is judged by asking the authentication server 200 whether or not the user is the user who can log in. Then, when it is judged by the multifunction machine that the user is the user who can log in, it is permitted to download the image file, and the download is actually started.

Subsequently, a so-called link mail flag process in the step S1706 will be described with reference to FIG. 19. Here, it should be noted that respective processes in steps S1901, S1902 and S1903 are performed by the CPU 301 of the multifunction machine 300.

In the step S1901, the transmission source (From) is obtained from the attachment mail received in the step S1701, and it is thus judged whether or not the mail addresses of the transmission source (From) of the attachment mail and the transmission destination obtained in the step S1705 are coincident (that is, the mail addresses of the transmission source and the transmission destination are compared with each other). That is, the process in this step is the process of judging whether or not to cause the user on the transmission destination to download the image file.

When it is judged that the mail addresses are coincident, the link mail flag is set to "ON" in the step S1903, and the obtained data is associated with the mail address used in the judgment and stored in the destination list in the RAM 302.

On the other hand, when it is judged that the mail addresses are not coincident, the link mail flag is set to "OFF" in the step S1902, and the obtained data is associated with the mail address used in the judgment and stored in the destination list in the RAM 302.

Incidentally, in the present embodiment, it is judged in the step S1901 whether or not the mail addresses of the transmission source and the transmission destination are coincident. However, it is also possible, in a case where the "@..." (domain name) portions of the mail addresses of the transmission source and the transmission destination are coincident, to advance the process to the step S1903 so as to transmit the link mail. This is because, in a company that every multifunction machines disposed therein can be accessed by the company members from the in-company network, it is necessary to enable the company members to access the multifunction machines from the in-company client terminals.

Thus, the user, who has logged in to the multifunction machine 300, can surely access the relevant multifunction machine 300. Therefore, it is possible to transmit the link mail, and obtain the image file while preventing the transmission of the large-sized mail such as the attachment mail. When the transmission destination is an external user or a user of group company (i.e., not the own company), the relevant user cannot access the multifunction machine 300. Therefore, it is possible to properly obtain the image file by transmitting not the link mail but the attachment mail to which the image file has been attached. That is, it is possible to cause the user who can access the multifunction machine to directly download the image file from the multifunction machine, and cause the user who cannot access the multifunction machine to obtain the image file by transmitting the attachment mail. Therefore, it is possible to enable the user to surely obtain the electronic data while reducing the transmission of the large-sized mail.

In particular, a facsimile number for facsimile transmission and the like, in addition to the mail address for mail transmission, can generally be registered in the address book of the multifunction machine 300, and the user can freely maintain (register and delete) the contents of the address book. For this reason, there is a case where the mail address of the user who cannot access the multifunction machine 300 has been registered in the address book. Here, even in a case where the mail address of the user who cannot access the multifunction machine is set to the mail transmission destination in the same manner as that for the mail address of the user who can access the multifunction machine, it is possible to properly obtain the image file.

Incidentally, although it is judged in the present embodiment whether to transmit the link mail or the attachment mail by using the mail address, it is also possible, as described above, to previously store the IP address at the time when the user logs in to the domain at the client terminal 400 to the user information table (FIG. 7) in the authentication server, transmit the relevant IP address to the multifunction machine 300 when the login process at the multifunction machine succeeds, compare the IP address received by the multifunction machine 300 with the IP address held by the multifunction machine 300 itself, and transmit the link mail when the compared IP addresses belong to the same segment. In other words, even in an environment that the client terminal 400 cannot access the multifunction machine 300 to download the image file because the client terminal 400 and the multifunction machine 300 respectively belong to the different segments, it is possible to obtain the image file attached to the mail.

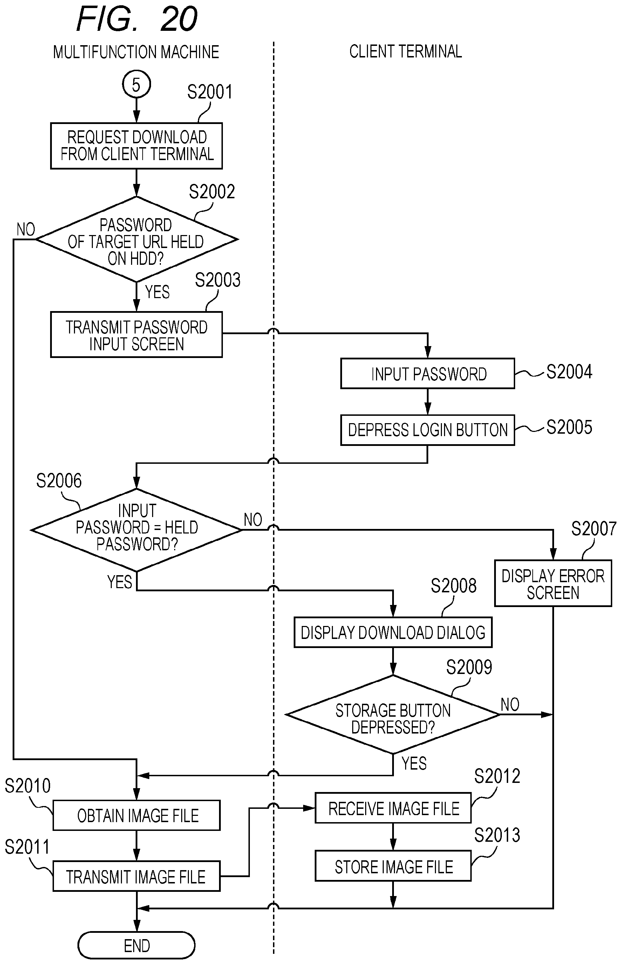

Subsequently, a download process to be performed when, after the mail was transmitted by the mail transmission module of the multifunction machine 300, it is instructed by the user who received the transmitted mail to download the image file will be described with reference to FIG. 20. Here, it should be noted that respective processes in steps S2001, S2002, S2003, S2006, S2010 and S2011 are performed by the CPU 301 of the multifunction machine 300, and respective processes in steps S2004, S2005, S2007, S2008, S2009, S2012 and S2013 are performed by the CPU 201 of the client terminal 400.

Incidentally, although it is illustrated that the process in FIG. 20 is performed subsequent to the process in FIG. 18, it is possible to perform the process in FIG. 20 asynchronously with the mail transmission process. Namely, since the download can be requested at any time if the mail has been received, the process in FIG. 20 is performed when the download is requested even in the case where the mail transmission process of the multifunction machine 300 is being performed by another user.

In the step S2001, in accordance with the IP address of the multifunction machine included in the link information (URL) described in the mail (link mail) received by the mail reception function 411 of the client terminal 400, the download request is transmitted to the multifunction machine to which the relevant IP address has been set, and the download request transmitted from the client terminal 400 is received by the multifunction machine 300 (download request reception). Then, the INI file held in the folder is referred by the download function 337 of the multifunction machine 300, from the folder path included in the link information (URL) obtained when the download request is received. Incidentally, the download request based on the link information can be performed by the input to the address section of the web browser on the client terminal 400.

In the step S2002, it is judged by the download function 337 whether or not the password has been stored in the INI file. When it is judged that the password has been stored in the INI file, the process advances to the step S2003. On the other hand, when it is judged that the password is not stored in the INI file, the process advances to the step S2010.

In the step S2003, since the password is necessary for the image file, a download input screen illustrated in FIG. 24 is transmitted to the client terminal 400 by the download function 337.

In the step S2004, the download input screen is received by the client terminal 400, and the received screen is displayed on the CRT 210 (display unit) of the client terminal. At this time, the web browser is used to display the download input screen. Then, the input of the password included in the mail transmitted in the step S1807 is accepted on the download input screen.

In the step S2005, it is detected by a file reception function 412 (FIG. 6) that a login button 2401 (FIG. 24) is depressed, and the accepted password is transmitted to the multifunction machine 300.

In the step S2006, it is judged by the download function 337 whether or not the password received from the client terminal 400 coincides with the password stored in the INI file. When it is judged that the received password coincides with the stored password, a download start process notification is transmitted to the client terminal 400, and the process advances to the step S2008. On the other hand, when it is judged that the received password does not coincide with the stored password, an error screen is transmitted to the client terminal 400, and the process advances to the step S2007.

In the step S2007, the error screen is received by the file reception function 412, the received error screen is displayed, and the process ends.

In the step S2008, the download start process notification is received by the file reception function 412, and a download dialog (not illustrated) for instructing whether or not to start the download is displayed. Here, a storage button (not illustrated) and a cancel button (not illustrated) are provided in the download dialog, a download start notification is transmitted to the multifunction machine 300 when the storage button is depressed in the step S2009, and the process advances to the step S2010. On the other hand, when the cancel button is depressed, the process immediately ends.

In the step S2010, the download start notification is received from the client terminal 400, and the image file stored in the folder (i.e., the image file of the file name stored in the INI file) is obtained by the download function 337.

In the step S2011, the obtained image file is transmitted to the client terminal 400 by the download function 337 (image file transmission).

In the step S2012, the image file transmitted from the multifunction machine 300 is received by the file reception function 412.

In the step S2013, the image file received by the file reception function 412 is stored in a predetermined storage destination. Here, the storage destination can arbitrarily be designated by the user.

As just described, according to the present embodiment, the transmission of the link mail for downloading the image file from the multifunction machine (information processing apparatus) and the transmission of the mail to which the image file has been attached are changed over based on the transmission destination information of the obtained mail. Thus, for example, it is possible even for the user who cannot log in to the multifunction machine to obtain the image file, and it is also possible to reduce the load on the network.

In particular, the mail transmission destination address and the mail transmission source address are compared with each other in the present embodiment. Thus, by storing the image file in the multifunction machine, and by transmitting the mail for downloading the image file from the multifunction machine or the mail to which the image file has been attached, for example, it is possible even for the user who cannot log in to the multifunction machine to easily obtain the image file.

Further, by changing the image file obtaining method on the basis of the mail transmitter and the mail receiver, and by enabling the multifunction machine accessible user to directly access the multifunction machine and obtain the image file, it is possible to reduce the transmission of the attachment mails.

Although the present embodiment has been described as above, it is also possible to adopt a constitution other than the above-described constitution to achieve the present invention.

Hereinafter, another embodiment of the present invention will be described in detail. Incidentally, detailed descriptions of the portions common to those in the above-described embodiment will be omitted because these portions perform the same processes as those in the above-described embodiment.

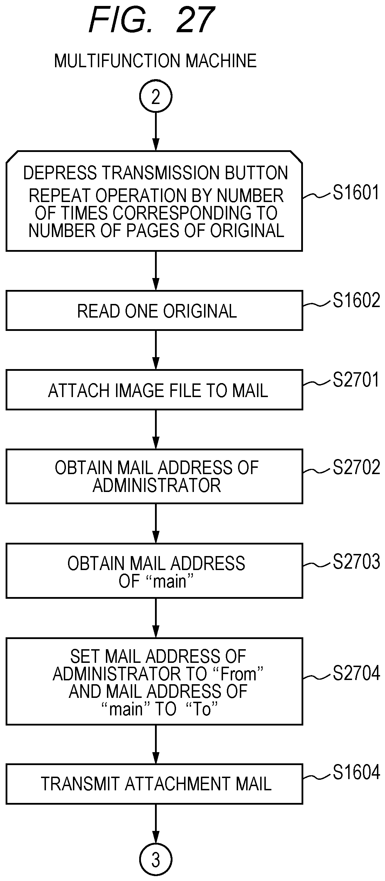

A mail transmission process to be performed by the mail transmission function 333 provided as the function of the body of the multifunction machine 300 according to another embodiment will be described with reference to FIG. 27. Namely, FIG. 27 is the flow chart of the mail transmission process to be performed by the mail transmission function 333 being the function of the body of the multifunction machine 300 according to the present embodiment.

In any case, since the respective processes in the steps S1601, S1602 and S1604 are the same as those already described with reference to FIG. 16, the description thereof will be omitted here. Here, it should be noted that respective processes in steps S2701, S2702, S2703 and S2704 are performed by the CPU 301 of the multifunction machine 300.

In the step S2701, the scanned images of all the pages scanned are obtained to generate the image file being one file, by the scan function 332. Then, by the mail transmission function 333, a new mail is generated, and the generated image file is attached to the generated mail.

In the step S2702, the mail address of the administrator of the multifunction machine 300 (for example, "Admin@xxxxx@coljp" of Administorator being the administration user previously set in the multifunction machine) stored in the HDD 304 of the multifunction machine 300 is obtained.

In the step S2703, the mail address of "main" stored in the RAM 302 is obtained as the destination of the mail.

In the step S2704, the mail address obtained in the step S2702 is set to the transmission source (From) of the new mail, and the mail address of "main" obtained in the step S2703 is set to the transmission destination (To) (transmission destination setting).

Incidentally, when the mail address of "sub" is obtained as the destination of the mail, the obtained mail address is set to the transmission destination (Cc).

Further, order of the setting of the mail address and the setting of the attachment of electronic data is arbitrarily determined when the new mail is generated.

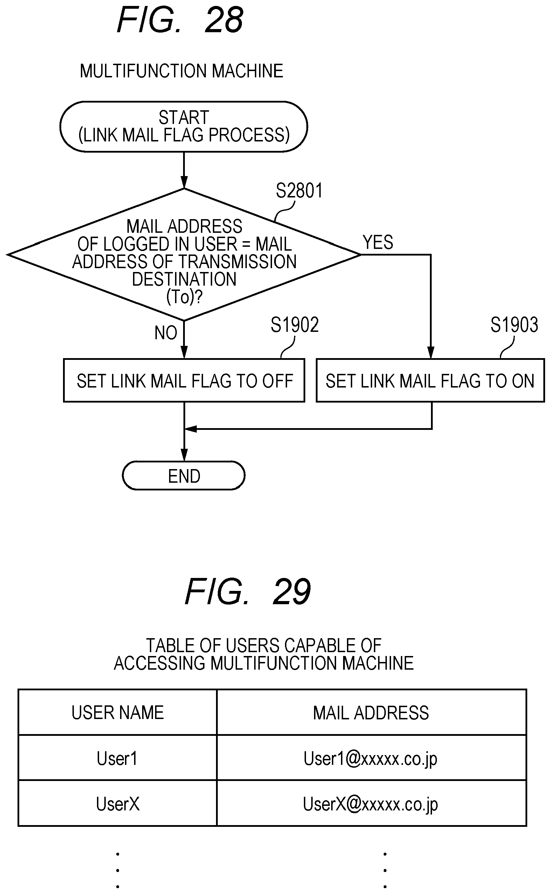

As illustrated in FIG. 27, when the mail address of the administrator of the multifunction machine 300 is set to the mail transmission source (From), any one of later-described processes illustrated in FIGS. 28, 29 and 30 is performed to judge whether to transmit the link mail or transmit the attachment mail.

Subsequently, another embodiment of the link mail flag process in FIG. 19 will be described with reference to FIG. 28. FIG. 28 is the flow chart of the link mail flag process according to another embodiment.

In any case, since the respective processes in the steps S1902 and S1903 are the same as those already described with reference to FIG. 19, the description thereof will be omitted here. Here, it should be noted that a process in a step S2801 is performed by the CPU 301 of the multifunction machine 300.

In the step S2801, the mail address of the logged in user is obtained from the login information stored in the RAM 302, and it is judged whether or not the obtained mail address and the mail address of the transmission destination (To) set in the mail are coincident. When it is judged that these mail addresses are coincident, the process advances to the step S1903. On the other hand, when it is judged that these mail addresses are not coincident, the process advances to the step S1902. That is, the process in this step is the process of judging whether or not to cause the user of the transmission destination to download the image file.

Incidentally, it is also possible to first judge whether or not the mail addresses of the transmission source (From) and the transmission destination (To) respectively set in the mail are coincident, and perform the judgment in the step S2801 when it is judged that the mail addresses of the transmission source (From) and the transmission destination (To) are not coincident. When it is judged that the mail addresses of the transmission source (From) and the transmission destination (To) are coincident, the mail is transmitted to the mail address of the user same as the logged in user of the multifunction machine 300. Therefore, when the mail addresses of the transmission source (From) and the transmission destination (To) are coincident, it is possible to download the image file from the multifunction machine 300, thereby transmitting the link mail.

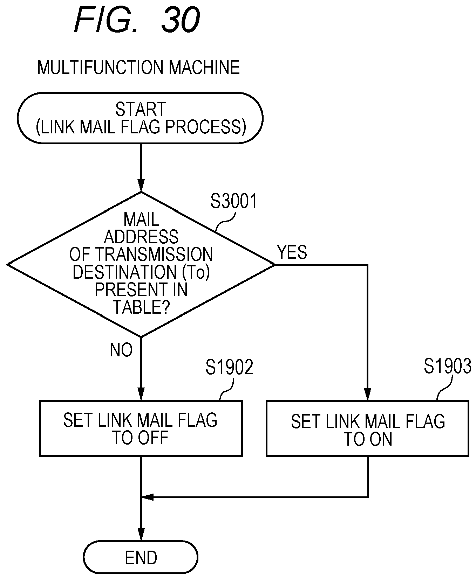

Subsequently, further another embodiment of the link mail flag process in FIG. 19 or 28 will be described with reference to FIGS. 29 and 30. FIG. 30 is the flow chart of the link mail flag process according to further another embodiment.

In any case, since the respective processes in the steps S1902 and S1903 are the same as those already described with reference to FIG. 19, the description thereof will be omitted here. Here, it should be noted that a process in a step S3001 is performed by the CPU 301 of the multifunction machine 300.

In the step S3001, it is judged whether or not the transmission destination (To) set in the mail is present in the user table capable of accessing the multifunction machine illustrated in FIG. 29. When it is judged that the transmission destination (To) set in the mail is present in the user table capable of accessing the multifunction machine illustrated in FIG. 29, since it is possible from the client terminal 400 to access and log in to the multifunction machine 300, the process advances to the step S1903 to download the image file. On the other hand, when it is judged that the transmission destination (To) set in the mail is not present in the user table capable of accessing the multifunction machine illustrated in FIG. 29, since it is impossible from the client terminal 400 to access and log in to the multifunction machine 300, the process advances to the step S1902 to cause to obtain the image file by the mail. That is, the process in this step is the process of judging whether or not to cause the user of the transmission destination to download the image file.

FIG. 29 is the view illustrating the user table which has been stored for each multifunction machine 300 and indicates the user who can access the own multifunction machine. On the user table, the user information (user names, and mail addresses) of the users who can access the multifunction machine has been stored.

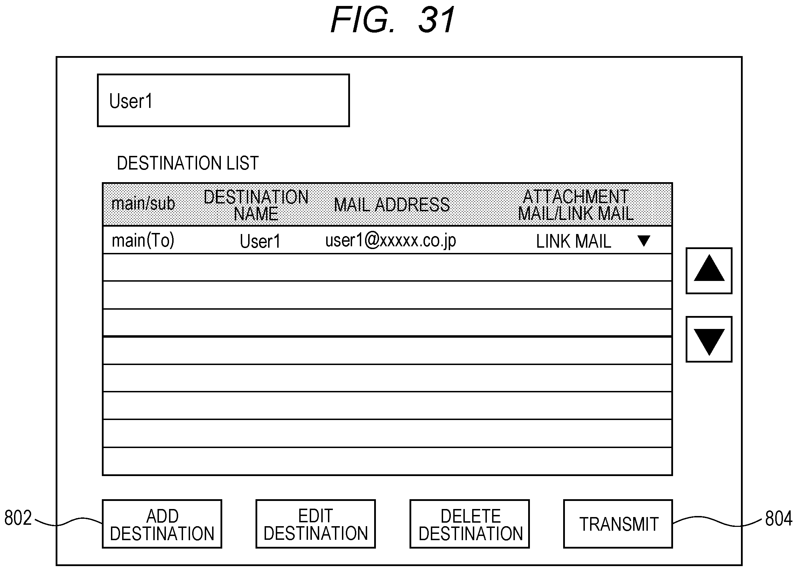

Incidentally, as described with reference to FIGS. 28 to 30, it is judged whether to transmit the link mail or transmit the attachment mail, on the basis of the judgment as to whether or not the mail address obtained from the user information of the logged in user and the transmission destination (To) are coincident and on the basis of the judgment as to whether or not the transmission destination (To) has been stored in the user table. Besides, as illustrated in FIG. 31, it is also possible to cause the user to set whether the transmission destination is the transmission destination to which the link mail is transmitted or the transmission destination to which the attachment mail is transmitted on the mail transmission screen indicating the destination list to be displayed on the operation unit 308 of the multifunction machine 300, and thus judge according to such setting whether to transmit the link mail or transmit the attachment mail.

As just described, other embodiments have been described. In these embodiments, the transmission of the link mail for downloading the image file from the multifunction machine (information processing apparatus) and the transmission of the mail to which the image file has been attached are changed over based on the transmission destination of the mail. Thus, for example, it is possible even for the user who cannot log in to the multifunction machine to obtain the image file, and it is also possible to reduce the load on the network.

In particular, the mail transmission destination address and the mail transmission source address are compared with each other. Thus, by storing the image file in the multifunction machine, and by transmitting the mail for downloading the image file from the multifunction machine or the mail to which the image file has been attached, for example, it is possible even for the user who cannot log in to the multifunction machine to easily obtain the image file.

Further, by changing the image file obtaining method on the basis of the mail transmitter and the mail receiver, and by enabling the multifunction machine accessible user to directly access the multifunction machine and obtain the image file, it is possible to reduce the transmission of the attachment mails.

In the embodiments described as above, the transmission destination and the transmission source are discriminated based on the mail address. However, it is also possible to discriminate based on, not the mail address, but the user name to be added together with the mail address. In this case, it is desirable that the user name is unique.

Further, in the embodiments described as above, the image file which is generated by reading the image on the original is used as the example of the electronic file. However, the present invention is not limited to the transmission of the image file, but can be applied to the transmission of various kinds of electronic files such as a voice file, a moving image file and the like.

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).

While the present invention has been described with reference to the exemplary embodiments, it is to be understood that the invention is not limited to the disclosed exemplary embodiments.

In an information processing apparatus which can transmit an electronic mail, transmission destination information of the electronic mail is obtained; it is judged based on the obtained transmission destination information whether to attach an electronic file to the electronic mail or describe link information for downloading the electronic file in the electronic mail; and the electronic mail to which the electronic file has been attached or the electronic mail in which the link information for downloading the electronic file has been described is transmitted based on a result of the judgment.

## Claims

1. A scanning apparatus (300) which can transmit an electronic mail, comprising:
a scanner (314) configured to scan a document and generate image data;
a storage (304) configured to store the image data generated by the scanner (314);
a performing unit (301) configured to perform a login of a user to the scanning apparatus;
a transmission destination setting unit (301) configured to set an email address as transmission destination information of the electronic mail;
a judgment unit (301) configured to judge whether to attach the image data stored in the storage to the electronic mail or describe link information for receiving the image data in the electronic mail, based on at least the email address set by the transmission destination setting unit; and
a transmission unit (301) configured to transmit the electronic mail to which the image data has been attached or the electronic mail in which the link information for receiving the image data has been described, based on a result of the judgment by the judgment unit,
**characterized in that**
the scanning apparatus (100) further comprises a transmission source setting unit (301) configured to set an email address of the user which is in a login state to the scanning apparatus by the login process as transmission source information of the electronic mail, and
the judgment unit is configured to judge to attach the image data to the electronic mail in a case where the email address set by the transmission destination setting unit is not same as the set email address of the user which is in the login state to the scanning apparatus, and judge to describe the link information for receiving the image data in the electronic mail in a case where the email address set by the transmission destination setting unit is same as the set email address of the user which is in the login state to the scanning apparatus.

2. The scanning apparatus according to Claim 1, further comprising an electronic mail obtaining unit (334) configured to obtain the electronic mail to which the image data has been attached,
wherein the transmission destination setting unit (301) obtains the transmission destination information set to the electronic mail obtained by the electronic mail obtaining unit.

3. The scanning apparatus according to any one of Claims 1 and 2, further comprising an image data transmission unit (301) configured to transmit, in a case where it is requested by an external apparatus to receive the image data according to the link information, the image data to the external apparatus.

4. The scanning apparatus according to any one of Claims 1 to 3, wherein, in a case where the plural transmission destination information are set by the transmission destination setting unit, the judgment unit judges whether to attach the image data to the electronic mail or describe the link information for receiving the image data to the electronic mail with respect for the every plural obtained transmission destination information.

5. A control method for a scanning apparatus (300) which can transmit an electronic mail, the method comprising:
scanning, by a scanner, a document and generate image data;
storing, in a storage, the image data generated by the scanner;
performing a login process of a user to the scanning apparatus;
setting an email address as transmission destination information of the electronic mail;
judging whether to attach the image data stored in the storage to the electronic mail or describe link information for receiving the image data in the electronic mail, based on at least the set email address; and
transmitting the electronic mail to which the image data has been attached or the electronic mail in which the link information for receiving the image data has been described, based on a result of the judgment,
**characterized in that**
the method further comprises setting an email address of the user which is a login state to use the scanning apparatus by the login process as transmission source information of the electronic mail, and
it is judged in the judging to attach the image data to the electronic mail in a case where the email address set as transmission destination information is not same as the set email address of the user which is in the login state to the scanning apparatus, and it is judged in the judging to describe the link information for receiving the image data in the electronic mail in a case where the email address set as transmission destination information is same as the set email address of the user which is in the login state to the scanning apparatus.

6. A program being executable in a scanning apparatus (300) which can transmit an electronic mail, wherein the scanning apparatus comprises a scanner configured to scan a document and generate image data, a storage configured to store the image data generated by the scanner and a performing unit configured to perform a login process of a user to the scanning apparatus, wherein the program causes the scanning apparatus to function as:
a transmission destination setting unit configured to set an email address as transmission destination information of the electronic mail;
a judgment unit configured to judge whether to attach the image data stored in the storage to the electronic mail or describe link information for receiving the image data in the electronic mail, based on at least the email address set by the transmission destination setting unit; and
a transmission unit configured to transmit the electronic mail to which the image data has been attached or the electronic mail in which the link information for receiving the image data has been described, based on a result of the judgment by the judgment unit,
**characterized in that**
the program further causes the scanning apparatus to function as a transmission source setting unit configured to set an email address of the user which is a login state to the scanning apparatus by the login process as transmission source information of the electronic mail, and
the judgment unit judges to attach the image data to the electronic mail in a case where the email address set by the transmission destination setting unit is not same as the set email address of the user which is in the login state to the scanning apparatus, and judges to describe the link information for receiving the image data in the electronic mail in a case where the email address set by the transmission destination setting unit is same as the set email address of the user which is in the login state to the scanning apparatus.

## Patentansprüche

1. Abtastvorrichtung (300), die elektronische Post senden kann, mit
einer Abtasteinrichtung (314) zur Abtastung eines Dokuments und Erzeugung von Bilddaten,
einer Speichereinrichtung (304) zur Speicherung der durch die Abtasteinrichtung (314) erzeugten Bilddaten,
einer Durchführungseinheit (301) zur Durchführung eines Einloggens eines Benutzers in die Abtastvorrichtung,
einer Sendezieleinstelleinheit (301) zur Einstellung einer Email-Adresse als Sendezielinformationen der elektronischen Post,
einer Beurteilungseinheit (301) zur Beurteilung zumindest beruhend auf der durch die Sendezieleinstelleinheit eingestellten Email-Adresse, ob die in der Speichereinrichtung gespeicherten Bilddaten an die elektronische Post anzufügen sind oder Verknüpfungsinformationen zum Empfangen der Bilddaten in der elektronischen Post zu beschreiben sind, und
einer Sendeeinheit (301) zum Senden der elektronischen Post, an die die Bilddaten angefügt sind, oder der elektronischen Post, in der die Verknüpfungsinformationen zum Empfangen der Bilddaten beschrieben sind, beruhend auf einem Ergebnis der Beurteilung durch die Beurteilungseinheit,
**dadurch gekennzeichnet, dass**
die Abtastvorrichtung (100) ferner eine Sendequelleneinstelleinheit (301) zur Einstellung einer Email-Adresse des Benutzers, der sich durch den Einloggprozess in einem in die Abtastvorrichtung eingeloggten Zustand befindet, als Sendequelleninformationen der elektronischen Post umfasst, und
die Beurteilungseinheit zur Beurteilung zum Anfügen der Bilddaten an die elektronische Post in einem Fall, in dem die durch die Sendezieleinstelleinheit eingestellte Email-Adresse nicht dieselbe wie die eingestellte Email-Adresse des Benutzers ist, der sich in dem in die Abtasteinrichtung eingeloggten Zustand befindet, und Beurteilung zum Beschreiben der Verknüpfungsinformationen zum Empfangen der Bilddaten in der elektronischen Post in einem Fall eingerichtet ist, in dem die durch die Sendezieleinstelleinheit eingestellte Email-Adresse dieselbe wie die eingestellte Email-Adresse des Benutzers ist, der sich in dem in die Abtastvorrichtung eingeloggten Zustand befindet.

2. Abtastvorrichtung nach Anspruch 1, ferner mit einer elektronischen Post-Erhalteeinheit (334) zum Erhalten der elektronischen Post, an die die Bilddaten angefügt sind,
wobei die Zieleinstelleinheit (301) die Sendezielinformationen erhält, die in der durch die elektronische Post-Erhalteeinheit erhaltenen elektronischen Post eingestellt sind.

3. Abtastvorrichtung nach einem der Ansprüche 1 und 2, ferner mit einer Bilddatensendeeinheit (301) zum Senden der Bilddaten zu einer externen Vorrichtung in einem Fall, in dem der Empfang der Bilddaten gemäß den Verknüpfungsinformationen durch die externe Vorrichtung angefragt wird.

4. Abtastvorrichtung nach einem der Ansprüche 1 bis 3, wobei in einem Fall, in dem viele Sendezielinformationen durch die Sendezieleinstelleinheit eingestellt sind, die Beurteilungseinheit jeweils hinsichtlich aller der vielen erhaltenen Sendezielinformationen beurteilt, ob die Bilddaten an die elektronische Post anzufügen sind oder die Verknüpfungsinformationen zum Empfangen der Bilddaten in der elektronischen Post zu beschreiben sind.

5. Steuerverfahren für eine Abtastvorrichtung (300), die elektronische Post senden kann, mit
Abtasten eines Dokuments und Erzeugen von Bilddaten durch eine Abtasteinrichtung,
Speichern der durch die Abtasteinrichtung erzeugten Bilddaten in einer Speichereinrichtung,
Durchführen eines Einloggprozesses eines Benutzers in die Abtastvorrichtung,
Einstellen einer Email-Adresse als Sendezielinformationen der elektronischen Post,
Beurteilen zumindest beruhend auf der eingestellten Email-Adresse, ob die in der Speichereinrichtung gespeicherten Bilddaten an die elektronische Post anzufügen sind oder Verknüpfungsinformationen zum Empfangen der Bilddaten in der elektronischen Post zu beschreiben sind, und
Senden der elektronischen Post, an die die Bilddaten angefügt sind, oder der elektronischen Post, in der die Verknüpfungsinformationen zum Empfangen der Bilddaten beschrieben sind, beruhend auf einem Ergebnis der Beurteilung,
**dadurch gekennzeichnet, dass**
das Verfahren ferner ein Einstellen einer Email-Adresse des Benutzers, der sich durch den Einloggprozess in einem eingeloggten Zustand zur Verwendung der Abtastvorrichtung befindet, als Sendequelleninformationen der elektronischen Post umfasst, und
bei der Beurteilung beurteilt wird, die Bilddaten an die elektronische Post in einem Fall anzufügen, in dem die als Sendezielinformationen eingestellte Email-Adresse nicht dieselbe wie die eingestellte Email-Adresse des Benutzers ist, der sich in dem in die Abtastvorrichtung eingeloggten Zustand befindet, und bei der Beurteilung beurteilt wird, die Verknüpfungsinformationen zum Empfangen der Bilddaten in der elektronischen Post in einem Fall zu beschreiben, in dem die als Sendezielinformationen eingestellte Email-Adresse dieselbe wie die eingestellte Email-Adresse des Benutzers ist, der sich in dem in die Abtastvorrichtung eingeloggten Zustand befindet.

6. Programm, das in einer Abtastvorrichtung (300) ausführbar ist, die elektronische Post senden kann, wobei die Abtastvorrichtung eine Abtasteinrichtung zum Abtasten eines Dokuments und Erzeugen von Bilddaten, eine Speichereinrichtung zur Speicherung der durch die Abtasteinrichtung erzeugten Bilddaten und eine Durchführungseinheit zur Durchführung eines Einloggprozesses eines Benutzers in die Abtastvorrichtung umfasst, wobei das Programm die Abtastvorrichtung veranlasst, zu arbeiten als:
Sendezieleinstelleinheit zum Einstellen einer Email-Adresse als Sendezielinformationen der elektronischen Post,
Beurteilungseinheit zur Beurteilung zumindest beruhend auf der durch die Sendezieleinstelleinheit eingestellten Email-Adresse, ob die in der Speichereinheit gespeicherten Bilddaten an die elektronische Post anzufügen sind oder Verknüpfungsinformationen zum Empfangen der Bilddaten in der elektronischen Post zu beschreiben sind, und
Sendeeinheit zum Senden der elektronischen Post, an die die Bilddaten angefügt sind, oder der elektronischen Post, in der die Verknüpfungsinformationen zum Empfangen der Bilddaten beschrieben sind, beruhend auf einem Ergebnis der Beurteilung durch die Beurteilungseinheit,
**dadurch gekennzeichnet, dass**
das Programm die Abtastvorrichtung ferner zum Arbeiten als Sendequelleneinstelleinheit zum Einstellen einer Email-Adresse des Benutzers, der sich durch den Einloggprozess in einem in die Abtastvorrichtung eingeloggten Zustand befindet, als Sendequelleninformationen der elektronischen Post veranlasst, und
die Beurteilungseinheit beurteilt, die Bilddaten an die elektronische Post in einem Fall anzufügen, in dem die durch die Sendezieleinstelleinheit eingestellte Email-Adresse nicht dieselbe wie die eingestellte Email-Adresse des Benutzers ist, der sich in dem in die Abtastvorrichtung eingeloggten Zustand befindet, und beurteilt, die Verknüpfungsinformationen zum Empfangen der Bilddaten in der elektronischen Post in einem Fall zu beschreiben, in dem die durch die Sendezieleinstelleinheit eingestellte Email-Adresse dieselbe wie die Email-Adresse des Benutzers ist, der sich in dem in die Abtastvorrichtung eingeloggten Zustand befindet.

## Revendications

1. Appareil de numérisation (300) pouvant transmettre un courrier électronique, comprenant :
un numériseur à balayage (314) configuré pour numériser un document et générer des données d'images ;
une unité de stockage (304) configurée pour stocker les données d'images générées par le numériseur à balayage (314) ;
une unité d'exécution (301) configurée pour exécuter une connexion d'un utilisateur à l'appareil de numérisation ;
une unité de réglage de destination de la transmission (301) configurée pour régler une adresse de courrier électronique en tant qu'information de destination de la transmission du courrier électronique ;
une unité de jugement (301) configurée pour juger s'il y a lieu de joindre les données d'images stockées dans l'unité de stockage au courrier électronique ou de décrire une information de lien permettant de recevoir les données d'images dans le courrier électronique, sur la base au moins de l'adresse de courrier électronique réglée par l'unité de réglage de destination de la transmission ; et
une unité de transmission (301) configurée pour transmettre le courrier électronique auquel les données d'images ont été jointes ou le courrier électronique dans lequel l'information de lien permettant de recevoir les données d'images a été décrite, sur la base d'un résultat du jugement effectué par l'unité de jugement,
**caractérisé en ce que**
l'appareil de numérisation (100) comprend en outre une unité de réglage de source de la transmission (301) configurée pour régler une adresse de courrier électronique de l'utilisateur qui est dans un état de connexion à l'appareil de numérisation par le processus de connexion en tant qu'information de source de la transmission du courrier électronique, et
l'unité de jugement est configurée pour juger qu'il y a lieu de joindre les données d'images au courrier électronique dans un cas où l'adresse de courrier électronique réglée par l'unité de réglage de destination de la transmission n'est pas identique à l'adresse de courrier électronique réglée de l'utilisateur qui est dans l'état de connexion à l'appareil de numérisation, et pour juger qu'il y a lieu de décrire l'information de lien permettant de recevoir les données d'images dans le courrier électronique lorsque l'adresse de courrier électronique réglée par l'unité de réglage de destination de la transmission est identique à l'adresse de courrier électronique réglée de l'utilisateur qui est dans l'état de connexion à l'appareil de numérisation.

2. Appareil de numérisation selon la revendication 1, comprenant en outre une unité d'obtention de courrier électronique (334) configurée pour obtenir le courrier électronique auquel les données d'images ont été jointes,
dans lequel l'unité de réglage de destination de la transmission (301) obtient l'information de destination de la transmission réglée pour le courrier électronique obtenu par l'unité d'obtention de courrier électronique.

3. Appareil de numérisation selon l'une quelconque des revendications 1 et 2, comprenant en outre une unité de transmission de données d'images (301) configurée pour transmettre les données d'images à l'appareil externe, dans un cas où il est demandé par un appareil externe de recevoir les données d'images conformément à l'information de lien.

4. Appareil de numérisation selon l'une quelconque des revendications 1 à 3, dans lequel, dans un cas où les multiples informations de destination de la transmission sont réglées par l'unité de réglage de destination de la transmission, l'unité de jugement juge s'il y a lieu de joindre les données d'images au courrier électronique ou de décrire l'information de lien permettant de recevoir les données d'images dans le courrier électronique en ce qui concerne chacune des multiples informations de destination de la transmission obtenues.

5. Procédé de contrôle destiné à un appareil de numérisation (300) qui peut transmettre un courrier électronique, le procédé comprenant :
la numérisation, par un numériseur à balayage, d'un document et la génération de données d'images ;
le stockage, dans une unité de stockage, des données d'images générées par le numériseur à balayage ;
l'exécution d'un processus de connexion d'un utilisateur à l'appareil de numérisation ;
le réglage d'une adresse de courrier électronique en tant qu'information de destination de la transmission du courrier électronique ;
le jugement du fait de savoir s'il y a lieu de joindre les données d'images stockées dans l'unité de stockage au courrier électronique ou de décrire l'information de lien permettant de recevoir les données d'images dans le courrier électronique, sur la base au moins de l'adresse de courrier électronique réglée ; et
la transmission du courrier électronique auquel les données d'images ont été jointes ou du courrier électronique dans lequel l'information de lien permettant de recevoir les données d'images a été décrite, sur la base d'un résultat du jugement,
**caractérisé en ce que** le procédé comprend en outre le réglage d'une adresse de courrier électronique de l'utilisateur qui est dans un état de connexion permettant l'utilisation de l'appareil de numérisation par le processus de connexion en tant qu'information de source de la transmission du courrier électronique, et
il est jugé lors du jugement qu'il y a lieu de joindre les données d'images au courrier électronique dans un cas où l'adresse de courrier électronique réglée en tant qu'information de destination de la transmission est différente de l'adresse de courrier électronique réglée de l'utilisateur qui est dans l'état de connexion à l'appareil de numérisation, et il est jugé lors du jugement qu'il y a lieu de décrire l'information de lien permettant de recevoir les données d'images dans le courrier électronique dans un cas où l'adresse de courrier électronique réglée en tant qu'information de destination de la transmission est identique à l'adresse de courrier électronique réglée de l'utilisateur qui est dans l'état de connexion à l'appareil de numérisation.

6. Programme exécutable sur un appareil de numérisation (300) qui peut transmettre un courrier électronique, dans lequel l'appareil de numérisation comprend un numériseur à balayage configuré pour numériser un document et générer des données d'images, une unité de stockage configurée pour stocker les données d'images générées par le numériseur à balayage et une unité d'exécution configurée pour exécuter un processus de connexion d'un utilisateur à l'appareil de numérisation, dans lequel le programme amène l'appareil de numérisation à fonctionner comme :
une unité de réglage de destination de la transmission configurée pour régler une adresse de courrier électronique en tant qu'information de destination de la transmission du courrier électronique ;
une unité de jugement configurée pour juger s'il y a lieu de joindre les données d'images stockées dans l'unité de stockage au courrier électronique ou de décrire une information de lien permettant de recevoir les données d'images dans le courrier électronique, sur la base au moins de l'adresse de courrier électronique réglée par l'unité de réglage de destination de la transmission, et
une unité de transmission configurée pour transmettre le courrier électronique auquel les données d'images ont été jointes ou le courrier électronique dans lequel l'information de lien permettant de recevoir les données d'images a été décrite, sur la base d'un résultat du jugement effectué par l'unité de jugement,
**caractérisé en ce que**
le programme amène en outre l'appareil de numérisation à fonctionner comme une unité de réglage de source de la transmission configurée pour régler une adresse de courrier électronique de l'utilisateur qui est dans un état de connexion à l'appareil de numérisation par le processus de connexion en tant qu'information de source de la transmission du courrier électronique, et
l'unité de jugement juge qu'il y a lieu de joindre les données d'images au courrier électronique dans un cas où l'adresse de courrier électronique réglée par l'unité de réglage de destination de la transmission est différente de l'adresse de courrier électronique réglée de l'utilisateur qui est dans l'état de connexion à l'appareil de numérisation, et juge qu'il y a lieu de décrire l'information de lien permettant de recevoir les données d'images dans le courrier électronique dans un cas où l'adresse de courrier électronique réglée par l'unité de réglage de destination de la transmission est identique à l'adresse de courrier électronique réglée de l'utilisateur qui se trouve dans l'état de connexion à l'appareil de numérisation.
